# EUROPÄISCHE PATENTSCHRIFT

(11) **EP 3 232 780 B1**
(45) Veröffentlichungstag und Bekanntmachung des Hinweises auf die Patenterteilung: **04.08.2021**
(21) Anmeldenummer: 15816743.7
(22) Anmeldetag: 17.12.2015
(51) Int. Cl.: A01N 25/24, A01N 25/30, A01N 59/00, A01N 37/20, A01N 37/40, A01N 39/04, A01N 41/06, A01N 41/10, A01N 43/40, A01N 43/88, A01N 57/20, C11D 1/29, A01P 13/00

(54) **WÄSSRIGE ELEKTROLYT ENTHALTENDE ADJUVANT-ZUSAMMENSETZUNGEN, WIRKSTOFF ENTHALTENDE ZUSAMMENSETZUNGEN UND DEREN VERWENDUNG**
AQUEOUS ELECTROLYTE-CONTAINING ADJUVANT COMPOSITIONS, ACTIVE INGREDIENT-CONTAINING COMPOSITIONS AND THE USE THEREOF
COMPOSITIONS ADJUVANTES AQUEUSES CONTENANT UN ÉLECTROLYTE, COMPOSITIONS CONTENANT UNE SUBSTANCE ACTIVE ET UTILISATION DESDITES COMPOSITIONS

(30) Priorität: 19.12.2014 DE 102014019239
(43) Veröffentlichungstag der Anmeldung: 25.10.2017
(73) Patentinhaber: Clariant International Ltd, 4132 Muttenz (CH)
(72) Erfinder: BAUR, Peter, 86938 Schondorf (DE); APONTE, John, 79541 Lörrach (DE); SCHWEINITZER, Gerd, 65934 Frankfurt am Main (DE)
(74) Vertreter: Jacobi, Carola
(86) Internationale Anmeldenummer: PCT/EP2015/080279
(87) Internationale Veröffentlichungsnummer: WO 2016/097178

(56) Entgegenhaltungen:
- EP-A1- 1 869 978
- GB-A- 2 006 255
- JP-A- 2002 201 493
- None

## Beschreibung

Die Erfindung betrifft wässrige Adjuvant-Zusammensetzungen enthaltend neben wasserlöslichen Wirkstoffen ausgewählte Tenside und deren Verwendung.

Pestizide (vor allem Herbizide, Fungizide und Insektizide) sind chemische Substanzen synthetisch hergestellt oder natürlichen Ursprungs, die in Pflanzenzellen, -gewebe oder in parasitäre Organismen in oder auf der Pflanze eindringen und diese schädigen und/oder zerstören. Den größten Anteil an Pestiziden stellen Herbizide dar. Pestizide werden üblicherweise in Form von flüssigen oder festen konzentrierten Zubereitungen (Formulierungen) in der Landwirtschaft eingesetzt. Die erleichtern dem Anwender so die Handhabung oder sorgen für eine höhere Wirksamkeit des Wirkstoffs. Die Formulierungen werden üblicherweise vor dem Einsatz mit Wasser verdünnt und anschließend durch Sprühapplikation ausgebracht.

Wasserlösliche Konzentrate (Soluble Liquids, abgekürzt mit SL) sind eine wichtige Form der Pestizidzubereitungen. Sie spielen insbesondere bei Herbiziden eine große Rolle, wobei die Pestizide oftmals als wasserlösliche Salze, die durch Neutralisation der Säureform der Herbizide mit geeigneten Basen in ihre Alkali- oder Ammoniumsalze überführt werden, eingesetzt werden. Unter Umständen ist ein zweiter nicht wasserlöslicher Wirkstoff in der Pestizidzubereitung enthalten. Dann handelt es sich um ein Suspensionskonzentrat (SC), auch wenn in der wässrigen Phase ein Wirkstoff gelöst ist.

Eine besonders wichtige Rolle spielen die wasserlöslichen Salze von Herbiziden, beispielsweise des Glyphosats, Glufosinats oder der Auxin-Herbizide wie 2,4-D oder Dicamba. Sie werden vorzugsweise als Alkalimetallsalz oder in Form verschiedener Ammoniumsalze bzw. als Gemisch dieser Salze meistens als wässrige Formulierungen verwendet.

Ein generelles Problem bei der Anwendung von Pestiziden aber auch von anderen Wirkstoffen ist, dass nur ein Bruchteil des Wirkstoffes die gewünschte Aktivität entfaltet. Der größere Teil geht oft ungenutzt verloren, indem der Wirkstoff bei der Ausbringung beispielsweise einer Spritzbrühe nicht die Blätter oder die Wurzeln der Pflanze erreicht, sondern ungenutzt im Boden versickert, durch Regen abgewaschen oder von der Pflanze einfach nicht richtig aufgenommen wird. Entsprechende Probleme können sich auch bei Applikationen von Wirkstoff-Zusammensetzungen bei Menschen oder Tieren ergeben.

Dieser ökologische und ökonomische Nachteil kann durch Zugabe von Hilfsstoffen, in der Fachsprache als "Adjuvant / Adjuvants", bezeichnet, zu Wirkstoff-Formulierungen verringert werden. Diese Hilfsstoffe können beispielsweise den Spray-Drift reduzieren, die Benetzung des zu behandelnden Organismus, beispielsweise der Pflanze verbessern oder dafür sorgen, dass der Wirkstoff länger auf der Oberfläche haftet bzw. besser aufgenommen wird. Insbesondere bei wasserlöslichen Pestiziden, wie bei Glyphosat, haben die Art sowie die Menge der verwendeten Adjuvantien einen entscheidenden Einfluss auf die Wirksamkeit der Formulierung.

Die mit Abstand am häufigsten verwendeten Adjuvantien in wässrigen Herbizid-Formulierungen sind Fettaminethoxylate, hauptsächlich Talgfettaminethoxylate. Diese Produkte sind jedoch aufgrund ihrer toxischen und ökotoxikologischen Eigenschaften, wie der starken Augenreizung oder der Toxizität gegenüber aquatischen Organismen als bedenklich einzustufen und werden zunehmend durch Adjuvants mit einem besseren toxikologischen und ökotoxikologischen Profil ersetzt.

Adjuvants, die in wässrigen Wirstoffformulierungen eingesetzt werden, liegen üblicherweise in flüssiger Form, d.h. als wassermischbare Lösungen vor, um die Herstellung der Wirkstoffformulierung zu vereinfachen. Die Adjuvant-Lösungen können Wasser und/oder wassermischbare Lösemittel enthalten, die zusammen mit dem Wirkstoff eine homogene und lagerstabile wässrige Formulierung ergeben. Wenn möglich wird Wasser als Lösemittel eingesetzt, da dies sowohl aus Kosten- als auch aus Umweltgesichtspunkten bevorzugt ist. Gegebenenfalls werden Co-Solventien zugesetzt, die in der Lage sind, die Löslichkeit oder die Stabilität zu verbessern.

In EP 1 869 978 A1 wird die Verwendung von Alkylethersulfaten als Additiv zur schaumarmen Zubereitung von Pflanzenschutzmitteln beschrieben. JP 2002 201493 A und GB 2 006 255 A beschreiben die Verwendung von Polyethylenglykol, Polyoxyethyleneglykol und Alkylglykolsulfaten als Bestandteile von Reinigungsmitteln.

Die Anforderungen an Adjuvants in wässrigen Wirkstoff-Zusammensetzungen sind im Laufe der Jahre stetig angewachsen. Neben hoher biologischer Wirksamkeit und Unbedenklichkeit, sowohl aus Sicht des Anwenders als auch unter Umweltgesichtspunkten, werden zunehmend vorteilhaftere anwendungstechnische Eigenschaften gefordert. Die Adjuvants sollen eine möglichst hohe Beladung der Formulierung mit dem Wirkstoff ermöglichen und möglichst mit verschiedenen Wirkstoffen kompatibel sein. Die Formulierungen müssen lagerstabil sein und eine möglichst niedrige Viskosität aufweisen, um eine leichtere Handhabung zu gewährleisten, sowie die möglichst vollständige Entleerung der Gebinde erleichtern. Außerdem ist eine gute Mischbarkeit und schnelles Lösevermögen, auch und besonders in kaltem Wasser, beim Ansetzen der Spritzbrühe gefordert.

Es stellte sich somit die Aufgabe, weitere wässrige Adjuvant-Zusammensetzungen zur Verfügung zu stellen, die hochwirksam sind, die sich durch ein sehr vorteilhaftes toxikologisches und ökologisches Profil auszeichnen und die aus anwendungstechnischer Sicht vorteilhafte Eigenschaften aufweisen. Weitere wünschenswerte Eigenschaften eines Adjuvants sind eine hohe Salztoleranz, d. h. die Fähigkeit, hohe Konzentrationen an gelösten Salzen aufzunehmen, sowie eine niedrige dynamische Oberflächenspannung, welche eine gute Benetzung von zu behandelnden Organismen bewirkt sowie die Solubilisierung von Wirkstoffen insbesondere von Elektrolyt-Wirkstoffen gestattet, so dass eine ausgezeichnete Verträglichkeit mit dem behandelten Organismus, beispielsweise einer Pflanze, resultiert.

Für Herstellung von wässrigen Wirkstoff-Zusammensetzungen sind bereits die unterschiedlichsten Tenside und Tensidkombinationen verwendet worden. Neben anionischen Tensiden werden häufig auch nichtionische Tenside oder Kombination von anionischen und nichtionischen Tensiden verwendet.

Eine bekannte Gruppe von Tensiden sind sulfatierte Polyalkylenglykolether. Solche Polyalkylenglykolethersulfatsalze wurden bislang als Emulgatoren für die Emulsionspolymerisation vorgeschlagen (vergl. dazu beispielsweise Sicherheitsdatenblatt gemäß Verordnung (EU) Nr. 453/2010 betreffend EMULSOGEN® PF 20 S. In Wirkstoffformulierungen wurden diese Tenside bisher nicht eingesetzt.

Es wurde jetzt überraschenderweise gefunden, dass Polyalkylenglykolethersulfatsalze sich vorteilhaft in wässrigen Systemen einsetzen lassen, die einen hohen Gehalt von dissoziierten Salzen (Elektrolyte) aufweisen können und welche die Formulierung von Zusammensetzungen mit niedriger dynamischer Oberflächenspannung gestatten. Das ist von großer Bedeutung für die Formulierung von wasserlöslichen Wirkstoffen, insbesondere der bedeutendsten Herbizide, wie Glyphosat.

Die vorliegende Erfindung betrifft eine, vorzugsweise einphasige Adjuvant-Zusammensetzung enthaltend
a) ein oder mehrere Polyalkylenglykolethersulfatsalze oder Polyalkylenglykolethersulfonatsalze,
b) Wasser, und
c) ein oder mehrere in Ionen dissoziierte Elektrolyte, die ausgewählt sind aus der Gruppe der wasserlöslichen Wirkstoffe,
   wobei die Komponente a) wiederkehrende Struktureinheiten aus der Gruppe Ethylenoxid-, Propylenoxid- und/oder Butylenoxid-Einheiten enthält.

Unter Wirkstoffen werden im Rahmen der vorliegenden Beschreibung Substanzen bezeichnet, die in einem Organismus eine spezifische Wirkung haben und eine spezifische Reaktion hervorrufen.

Unter Wirkstoffen sind im Rahmen der vorliegenden Beschreibung insbesondere agrochemische Wirkstoffe, also wirksame Bestandteile von Pflanzenschutzmitteln; Biozide, also wirksame Bestandteile von Schädlingsbekämpfungsmitteln; Repellents, also wirksame Bestandteile von Mitteln zur Abwehr von Pflanzen oder Tieren zu verstehen.

Unter Elektrolyten sind im Rahmen der vorliegenden Beschreibung chemische Verbindungen zu verstehen, die in wässriger Lösung in dissoziierter Form als Ionen vorliegen. Im Allgemeinen handelt es sich hierbei also um Salze, die bei Auflösung in Wasser in Ionen dissoziieren. Zu den Elektrolyten zählen auch wasserlösliche Wirkstoffe. Diese enthalten vorzugsweise ein oder mehrere Gruppen, wie Carbonsäure-, Sulfonsäure-, Phosphorsäure-, Phosphonsäure- oder Ammoniumreste. Diese Reste weisen Gegenionen auf, die bei Auflösung der Verbindung in Wasser dissoziieren.

Bei Komponente a) der erfindungsgemäßen Zusammensetzung handelt es sich um ein sulfatiertes Polyalkylenglykol. Tenside dieses Typs können ein oder mehrere Sulfatgruppen und/oder Sulfonatgruppen pro Molekül enthalten. Vorzugsweise enthalten diese Tenside ein oder mehrere Sulfatgruppen.

Besonders bevorzugte Tenside dieses Typs weisen die nachfolgende Struktur auf

(HO-(CH₂-CH₂-O-)ₙ(CH₂-CH(CH₃)-O)ₘ-CH₂-CH₂-O-SO₂-O⁻)_{q} M^{q+},

worin
- n und m: unabhängig voneinander ganze Zahlen von 2 bis 40 bedeuten,
- q: 1 oder 2 ist, und
- M: ein ein- oder zweiwertiges Kation ist.

Die Tenside der Komponente a) enthalten wiederkehrende Struktureinheiten mit zwei bis vier Kohlenstoffatomen, also Einheiten abgeleitet von Ethylenoxid, von Propylenoxid und/oder von Butylenoxid. Bevorzugt enthalten Tenside der Komponente a) Ethylenoxid- und/oder Propylenoxideinheiten. Diese können in statistischer Verteilung im Molekül vorliegen oder in Form von Blöcken. Bevorzugt enthalten die Tenside der Komponente a) im Mittel eine Sulfatgruppe pro Molekül. Die Tenside der Komponente a) treten im Allgemeinen als Gemisch von Oligomeren oder von Polymeren mit unterschiedlichem Polymerisationsgrad bzw. unter-schiedlichem Molekulargewicht auf. Typische Polymerisationsgrade liegen im Bereich von 5 bis 80, vorzugsweise von 5 bis 60 und besonders bevorzugt von 10 bis 40 von wiederkehrenden Einheiten pro Molekül.

Bevorzugt werden Adjuvant-Zusammensetzungen deren Komponente a) Ethylenoxid-, Propylenoxid- und/oder Butylenoxid-Einheiten enthält, insbesondere Ethylenoxid- und Propylenoxid-Einheiten.

Besonders bevorzugt werden Adjuvant-Zusammensetzungen, deren Komponente a) Blöcke von Ethylenoxid-Einheiten und von Propylenoxid-Einheiten enthält.

Die Gegenionen der Sulfatgruppe(n) oder der Sulfonatgruppe(n) der Komponente a) können beliebig sein. Typischerweise handelt es sich dabei um ein- bis dreiwertige Kationen, und insbesondere um ein- bis zweiwertige Kationen.

Bevorzugt werden Adjuvant-Zusammensetzungen, deren Polyalkylenglykolethersulfatsalz der Komponente a) ein Alkali-, Erdalkali-, Sulfonium- und/oder Ammoniumsalz ist, insbesondere ein Ammoniumsalz, ein Sulfoniumsalz, ein Natriumsalz oder ein Kaliumsalz.

Von den Ammoniumsalzen sind insbesondere solche bevorzugt, die sich von einem Alkylamin, Dialkylamin oder Trialkylamin ableiten, beispielsweise von Isopropylamin (IPA oder MIPA), von Diglykolamin (DGA), von Dimethylamin (DMA) oder von N,N-Bis-(3-aminopropyl)methylamin (BAPMA) ableiten oder von Ammoniak. Die Alkylreste dieser Alkylamine können verzweigt oder linar sowie gesättigt oder ungesättigt sein.

Von den Sulfoniumsalzen sind insbesondere Trimethylsulfoniumsalze bevorzugt.

Die Menge an Komponente a) der erfindungsgemäßen Adjuvant-Zusammensetzungen kann in weiten Bereichen schwanken. Der Anteil des einen oder der mehreren Polyalkylenglykolethersulfatsalze oder -sulfonatsalze a) in den erfindungsgemäßen Adjuvant-Zusammensetzungen kann z. B. 2 bis 90 Gew.-% betragen, bevorzugt 2 bis 60 Gew.-% und besonders bevorzugt 5 bis 15 Gew.-%, bezogen auf das Gesamtgewicht der Zusammensetzung. Der Anteil des Polyalkylenglykolethersulfat- oder -sulfonatsalzes a) kann durch Verdünnen mit Wasser noch herabgesetzt werden.

Als Komponente b) enthalten die erfindungsgemäßen Adjuvant-Zusammensetzungen Wasser. Als Wasser kommen beispielsweise entsalztes Wasser, Grund-, See- oder Leitungswasser in Frage, bevorzugt hat das Wasser eine Härte von unter 15 ° dH (Deutscher Härte).

Die Menge an Komponente b) der erfindungsgemäßen Adjuvant-Zusammensetzungen kann ebenfalls in weiten Bereichen schwanken. Bevorzugt beträgt der Anteil des Wassers b) in den erfindungsgemäßen Adjuvant-Zusammensetzungen bis 70 Gew.-%, bevorzugt 20 bis 70 Gew.-% und besonders bevorzugt 30 bis 50 Gew.-%, bezogen auf das Gesamtgewicht der Zusammensetzung. Dieser Anteil des Wassers kann durch Verdünnen noch hinaufgesetzt werden.

Auch die Menge an Komponente c) der erfindungsgemäßen Adjuvant-Zusammensetzungen kann in weiten Bereichen schwanken. Vorzugsweise beträgt der Anteil des einen oder der mehreren Elektrolyte c) in den erfindungsgemäßen Adjuvant-Zusammensetzungen 1 bis 95 Gew.-%, bevorzugt 10 bis 95 Gew.-% und besonders bevorzugt 20 bis 90 Gew.-%, bezogen auf das Gesamtgewicht der Zusammensetzung, beträgt. Der Anteil des Elektrolyten c) kann durch Verdünnen mit Wasser noch herabgesetzt werden.

Bei dem Elektrolyten c) handelt es sich ganz allgemein um wasserlösliche Salze. Dabei kann es sich beispielsweise um Metallsalze mit ein- bis dreiwertigen Kationen und ein bis dreiwertigen anionischen Wirkstoffen handeln. Bevorzugt wird der Elektrolyt c) ausgewählt aus der Gruppe der Alkalimetallsalze, der Erdalkalimetallsalze und/oder der Ammoniumsalze von anionischen Wirkstoffen, insbesondere von Ammoniumsalzen abgeleitet von einem Alkylamin, Dialkylamin oder Trialkylamin ableiten, beispielsweise von Isopropylamin (IPA oder MIPA), von Diglykolamin (DGA), von Dimethylamin (DMA) oder von N,N-Bis-(3-aminopropyl)methylamin (BAPMA) oder von Ammoniak.

Bei dem Elektrolyten c) handelt es sich um einen wasserlöslichen Wirkstoff.

Unter dem Begriff "wasserlöslich" oder "Wasserlöslichkeit" ist im Rahmen dieser Beschreibung zu verstehen, dass die betreffende chemische Verbindung sich zu mindestens 1 g / l in Wasser von 25 °C löst.

Entsprechend ist unter dem Begriff "nicht wasserlöslich" oder "Nicht-Wasserlöslichkeit" im Rahmen dieser Beschreibung zu verstehen, dass die betreffende chemische Verbindung sich zu weniger als 1 g / l in Wasser von 25 °C löst.

Weiterhin Gegenstand der Erfindung ist eine Zusammensetzung enthaltend die oben beschriebenen Komponenten a), b) und c) sowie zusätzlich mindestens einen nicht-wasserlöslichen Wirkstoff d).

Bei dem erfindungsgemäß eingesetzten nicht-wasserlöslichen Wirkstoff d) kann es sich grundsätzlich um eine Substanz handeln, die in einem Organismus eine spezifische Wirkung hat und eine spezifische Reaktion hervorruft.

Bevorzugt handelt es sich bei dem wasserlöslichen Wirkstoff c) und/oder bei dem nicht-wasserlöslichen Wirkstoff d) um eine Verbindung, die ausgewählt wird aus der Gruppe bestehend aus agro-chemischen Wirkstoffen, Bioziden und Repellents, besonders aus Pestiziden und insbesondere aus Herbiziden, Fungiziden und Insektiziden.

Besonders bevorzugte erfindungsgemäße Zusammensetzungen enthalten neben den oben beschriebenen Komponenten a) bis c) und gegebenenfalls d) mindestens eine der zusätzlichen Komponenten e) bis h)
e) ein oder mehrere Alkylglucamide der Formel (I) 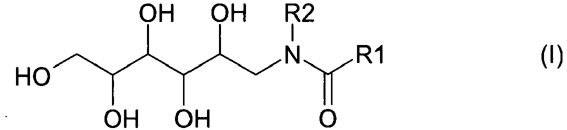 worin
   - R1: für eine lineare oder verzweigte Alkylgruppe mit 5 bis 12 Kohlenstoffatomen, vorzugsweise mit 7 bis 9 Kohlenstoffatomen steht,
   - R2: für eine Alkylgruppe mit 1 bis 3 Kohlenstoffatomen, vorzugsweise für Methyl steht,
f) Propylenglykol, Dipropylenglykol, Mischungen aus Propylenglykol und Dipropylenglykol, jeweils gegebenenfalls in Mischung mit Polypropylenglykol und/oder Polyethylenglykol, jeweils mit bis zu zehn Wiederholeinheiten,
g) ein oder mehrere CoSolventien, und/oder
h) ein oder mehrere Hilfsstoffe.

Die erfindungsgemäße Adjuvant-Zusammensetzung erhöht insbesondere die Wirksamkeit von Elektrolyt-Wirkstoffen, d. h. von Wirkstoffen, die als wasserlösliche Salze vorliegen.

In einer bevorzugten Ausführungsform enthält die Adjuvant-Zusammensetzung neben Wasser und gegebenenfalls Propylenglykol keine weiteren Lösungsmittel.

In einer weiteren bevorzugten Ausführungsform besteht die Adjuvant-Zusammensetzung aus den oben beschriebenen Komponenten a) bis d).

Als Komponente e) kann die erfindungsgemäße Zusammensetzung ein oder mehrere Alkylglucamide der Formel (I) enthalten.

In dem einen oder den mehreren Alkylglucamiden der Formel (I) steht der Rest R1 vorzugsweise für eine lineare oder verzweigte Alkylgruppe mit 7 bis 9 Kohlenstoffatomen. Der Rest R2 steht bevorzugt für eine Methylgruppe.

Besonders bevorzugt enthalten die erfindungsgemäßen Zusammensetzungen als Komponente e) ein Gemisch aus Octyl-N-methylglucamid (R¹ = C₇-Alkyl, R² = Methyl) und Decyl-N-methylglucamid (R¹ = C₉-Alkyl, R² = Methyl). Dieses Produkt ist unter der Bezeichung Synergen® GA von Clariant erhältlich. Der Anteil an Octyl-N-methylglucamid in diesem Gemisch beträgt 10 bis 90 Gew.-%, vorzugsweise 20 bis 80 Gew.-% und besonders bevorzugt 30 bis 70 Gew.-%, bezogen auf die Gesamtmenge der in diesem Gemisch enthaltenen Alkylglucamide. Der Anteil an Decyl-N-methylglucamid in diesem Gemisch beträgt 10 bis 90 Gew.-%, vorzugsweise 20 bis 80 Gew.-% und besonders bevorzugt 30 bis 70 Gew.-%, bezogen auf die Gesamtmenge der in diesem Gemisch enthaltenen Alkylglucamide. Bevorzugt ist auch Nonyl-N-Methylglucamid (R¹ = C₈-Alkyl, R² = Methyl, basierend auf Pelargonsäure).

Der Pentahydroxyhexylrest in den Alkylglucamiden der Formel (I) verfügt über verschiedene chirale Zentren, so dass jeweils mehrere Stereoisomere existieren können. Üblicherweise werden die Alkylglucamide der Formel (I) aus natürlich vorkommenden Zuckern, wie der D-Glucose hergestellt, grundsätzlich ist aber auch die Verwendung anderer natürlicher oder synthetischer Hexosen oder anderer C₆-Bausteine möglich, so dass unterschiedliche Stereoisomere der Formel (I) resultieren können.

Die Herstellung der Alkylglucamide der Formel (I) ist hinlänglich vorbeschrieben und dem Fachmann bekannt. Sie erfolgt beispielsweise durch Kondensation von Carbonsäureestern mit einem sekundären N-Alkylglucamin, welches seinerseits durch reduktive Aminierung aus einem Zucker wie D-Glucose hergestellt werden kann.

Bevorzugt enthalten die erfindungsgemäßen Zusammensetzungen 1 bis 90 Gew.-%, besonders bevorzugt 2 bis 30 Gew.-% und insbesondere bevorzugt 2 bis 15 Gew.-% des einen oder der mehreren Alkylglucamide der Komponente e).

Mit den oben beschriebenen Alkylglucamiden der Formel (I) lassen sich erfindungsgemäße Wirkstoff d) enthaltende Zusammensetzungen, insbesondere wässrige Herbizid-Formulierungen, mit ausgezeichneten anwendungstechnischen Eigenschaften herstellen.

Die Alkylglucamide der Formel (I) basieren bevorzugt auf nachwachsenden Rohstoffen und zeichnen sich durch ein vorteilhaftes toxikologisches und ökologisches Profil aus. Sie besitzen eine hohe Löslichkeit in Wasser.

Die Verwendung von zuckerbasierenden Tensiden, wie Alkyl-N-methylglucosamiden, beispielsweise in Reinigungsmitteln und kosmetischen Produkten, ist in der Literatur beschrieben (F.W. Lichtenthaler, "Carbohydrates as Organic Raw Materials" in Ullmann's Ullmann's Encyclopedia of Industrial Chemistry, Wiley-VCH Verlag, 2010).

WO 96/16540 beschreibt Pestizidzusammensetzungen, die langkettige Alkylamide, die einen Polyhydroxycarbonyl-Substituenten mit mindestens drei Hydroxylgruppen am Amidstickstoff tragen. In den Beispielen sind Emulsionskonzentrate, wasserdispergierbare Pulver und Granulate von Dodecyl-N-methylglucamid, Dodecyl-tetradecyl-N-methylglucamid und Cetylstearyl-N-methylglucamid beschrieben.

Als Komponente f) können die erfindungsgemäßen Zusammensetzungen Propylenglykol oder Dipropylenglykol, sowie Kombinationen beider untereinander oder mit Polypropylenglykol oder Polyethylenglykol mit bis zu 10 Wiederholendeinheiten enthalten. Bevorzugt ist Propylenglykol.

Der Gehalt an Komponente f) beträgt bevorzugt 1 bis 30 Gew.-%, besonders bevorzugt 2 bis 10 Gew.-%, insbesondere bevorzugt 2 bis 5 Gew.-%.

In einer Ausführungsform können die Adjuvant-Zusammensetzungen neben den Komponenten a) bis d) neben der Komponente b) ein weiteres Co-Solvens g) enthalten.

Das optional enthaltene Co-Solvens g) kann entweder als Nebenkomponente aus dem Herstellungsprozess des Alkylglucamids zugegen sein oder nachträglich zur Adjuvant-Zusammensetzung zugegeben worden sein. Bei dem Co-Solvens kann es sich um ein einziges Lösemittel oder ein Gemisch zweier oder mehrerer Lösemittel handeln. Dazu eignen sich alle polaren Lösemittel, die mit der wässrigen Pestizidzusammensetzung kompatibel sind und eine homogene Phase bilden. Geeignete Co-Solventien sind beispielsweise einwertige Alkohole, wie Methanol, Ethanol, Propanole, Butanole, Benzylalkohol oder weitere mehrwertige Alkohole wie Ethylenglykol, Diethylenglykol oder Glycerin oder Polyglykole wie Polyethylen-, Polypropylen- oder gemischte Polyalkylenglykole (PAGs). Weitere geeignete Lösemittel sind Ether wie beispielsweise Propylenglykolmono- oder dimethylether, Dipropylenglykolmono- oder dimethylether, Amide wie beispielsweise N-Methyl- oder N-Ethylpyrrolidon, Milchsäure-, Capryl- oder Decansäuredimethylamid.

Der Anteil des Co-Solvens in der Zusammensetzung, falls vorhanden, beträgt üblicherweise 10 bis 250 g/l, bevorzugt 20 bis 200 g/l und besonders bevorzugt 30 bis 150 g/l.

In einer bevorzugten Ausführungsform enthält das erfindungsgemäße Adjuvant kein weiteres Co-Solvent g).

In einer weiteren Ausführungsform können die erfindungsgemäßen Zusammensetzungen neben Komponenten a) bis c) und gegebenenfalls d) bis g) ein oder mehrere weitere Hilfsstoffe h) enthalten, wobei es sich bei diesen beispielsweise um Konservierungsmittel, Tenside, Entschäumer, funktionelle Polymere oder zusätzliche Adjuvants handeln kann. Beispiele für solche Hilfsstoffe finden sich weiter unten.

Die Adjuvant-Zusammensetzungen eignen sich vorzugsweise als Adjuvants in wässrigen Pestizidzusammensetzungen zur Verbesserung der biologischen Aktivität von beispielsweise Herbiziden, Insektiziden, Fungiziden, Akariziden, Bakteriziden, Molluskiden, Nematiziden und Rodentiziden.

Vorzugsweise genannt seien als Pestizide Fungizide, Bakterizide, Insektizide, Akarizide, Nematizide, Herbizide, Pflanzenwuchsregulatoren, Pflanzennährstoffe und Repellents.

Besonders bevorzugte erfindungsgemäße Zusammensetzungen enthalten neben den oben beschriebenen Komponenten a) und b) als Komponente c) ein oder mehrere wasserlösliche Pestizide und gegebenenfalls ein oder mehrere nicht-wasserlösliche Pestizide d).

Die erfindungsgemäßen Zusammensetzungen sind insbesondere geeignet für Kombinationen mit einem oder mehreren der folgenden wasserlöslichen Wirkstoffen (Komponente c)) Acifluorfen, Aminopyralid, Amitrol, Asulam, Benazolin, Bentazon, Bialaphos, Bispyribac, Bromacil, Bromoxynil, Bicyclopyron, Chloramben, Clopyralid, 2,4-D, 2,4-DB, Dicamba, Dichlorprop, Difenzoquat, Diquat, Endothal, Fenoxaprop, Flamprop, Florasulam, Flumiclorac, Fluoroglycofen, Fluroxypyr, Fomesafen, Fosamine, Glufosinat, Glyphosat, Imizameth, Imazamethabenz, Imazamox, Imazapic, Imazapyr, Imazaquin, Imazethapyr, MCPA, MCPB, Mecoprop, Mesotrione, Nicosulfuron, Octansäure, Pelargonsäure, Picloram, Quizalofop, 2,3,6-TBA, Sulcotrione, Tembotrione und Triclopyr sind bevorzugt.

Weitere bevorzugte erfindungsgemäße Zusammensetzungen enthalten ein oder mehrere wasserlösliche Pestizide als Komponente c), die ausgewählt sind aus wasserlöslichen Salzen von 2,4-D, Bentazon, Dicamba, Fomesafen, Glyphosat, Glufosinat, MCPA, Mesotrione Paraquat und Sulcotrione, besonders bevorzugt aus den wasserlöslichen Salzen von Glyphosat und Dicamba.

Wasserlösliche Salze von Pestiziden der Komponente c), insbesondere von Glyphosat und Dicamba, werden bevorzugt als Alkali-, Erdalkali-, Sulfonium- und/oder Ammoniumsalze eingesetzt, insbesondere als Ammoniumsalze, Sulfoniumsalze, Natriumsalze oder Kaliumsalze.

Von den Ammoniumsalzen dieser wasserlöslichen Pestizide der Komponente c), insbesondere von Glyphosat und Dicamba, sind insbesondere Isopropylammonium, Dimethylammonium oder Ammoniumsalze bevorzugt.

Von den Sulfoniumsalzen dieser wasserlöslichen Pestizide der Komponente c), insbesondere von Glyphosat und Dicamba, sind insbesondere Trimethylsulfoniumsalze bevorzugt.

Von den Alkalimetallsalzen dieser wasserlöslichen Pestizide der Komponente c), insbesondere von Glyphosat und Dicamba, sind insbesondere Natrium- oder Kaliumsalze bevorzugt.

Die erfindungsgemäßen Zusammensetzungen können daneben, in der Formulierung oder auch der Spritzbrühe, weitere Pestizide enthalten, die gelöst oder auch dispergiert vorliegen können.

Im Folgenden werden weiter Beispiele für Pestizide genannt, die gelöst als Komponente c) oder nicht gelöst als Komponente d) vorliegen oder die Kombinationspartner dieser Pestizide bilden können.

Als Beispiele für Herbizide seien genannt:
Wirkstoffe, die auf einer Inhibition von beispielsweise Acetolaktat-Synthase, Acetyl-CoA-Carboxylase, Cellulose-Synthase, Enolpyruvylshikimat-3-phosphat-Synthase, Glutamin-Synthetase, p-Hydroxyphenylpyruvat-Dioxygenase, Phytoendesaturase, Photosystem I, Photosystem II, Protoporphyrinogen-Oxidase beruhen, einsetzbar, wie sie z. B. aus Weed Research 26 (1986) 441 445 oder "The Pesticide Manual", 16th edition, The British Crop Protection Council and the Royal Soc. of Chemistry, 2012 und dort zitierter Literatur beschrieben sind. Als bekannte Herbizide oder Pflanzenwachstumsregulatoren, die mit den erfindungsgemäßen Verbindungen kombiniert werden können, sind z. B. folgende Wirkstoffe zu nennen (die Verbindungen sind entweder mit dem "common name" nach der International Organization for Standardization (ISO) oder mit dem chemischen Namen oder mit der Codenummer bezeichnet) und umfassen stets sämtliche Anwendungsformen wie Säuren, Salze, Ester und Isomere wie Stereoisomere und optische Isomere. Dabei sind beispielhaft eine und zum Teil auch mehrere Anwendungsformen genannt:
Acetochlor, Acibenzolar, Acibenzolar-S-methyl, Acifluorfen, Acifluorfen-sodium, Aclonifen, Alachlor, Allidochlor, Alloxydim, Alloxydim-sodium, Ametryn, Amicarbazone, Amidochlor, Amidosulfuron, Aminocyclopyrachlor, Aminocyclopyrachlorkalium, Aminocyclopyrachlormethyl, Aminopyralid, Amitrole, Ammoniumsulfamat, Ancymidol, Anilofos, Asulam, Atrazine, Aviglycin, Azafenidin, Azimsulfuron, Aziprotryn, Beflubutamid, Benazolin, Benazolinethyl, Bencarbazone, Benfluralin, Benfuresate, Bensulide, Bensulfuron, Bensulfuronmethyl, Bentazone, Benzfendizone, Benzobicyclon, Benzofenap, Benzofluor, Benzoylprop, Benzyladenin, Bicyclopyrone, Bifenox, Bilanafos, Bilanafosnatrium, Bispyribac, Bispyribacnatrium, Bromacil, Bromobutide, Bromofenoxim, Bromoxynil, Bromuron, Buminafos, Busoxinone, Butachlor, Butafenacil, Butamifos, Butenachlor, Butralin, Butroxydim, Butylate, Cafenstrole, Carbaryl, Carbetamide, Carfentrazone, Carfentrazoneethyl, Carvone, Chlorcholinchlorid, Chlomethoxyfen, Chloramben, Chlorazifop, Chlorazifopbutyl, Chlorbromuron, Chlorbufam, Chlorfenac, Chlorfenacnatrium, Chlorfenprop, Chlorflurenol, Chlorflurenolmethyl, Chloridazon, Chlorimuron, Chlorimuronethyl, Chlormequatchlorid, Chlornitrofen, 4-Chlorophenoxyacetic acid, Chlorophthalim, Chlorpropham, Chlorthaldimethyl, Chlorotoluron, Chlorsulfuron, Cinidon, Cinidonethyl, Cinmethylin, Cinosulfuron, Clethodim, Clodinafop, Clodinafoppropargyl, Clofencet, Clomazone, Clomeprop, Cloprop, Clopyralid, Cloransulam, Cloransulammethyl, Cloxyfonac, Cumyluron, Cyanamide, Cyanazine, Cyclanilide, Cycloate, Cyclosulfamuron, Cycloxydim, Cycluron, Cyhalofop, Cyhalofopbutyl, Cyperquat, Cyprazine, Cyprazole, Cytokinine, 2,4-D, 2,4-DB, Daimuron/Dymron, Dalapon, Daminozide, Dazomet, n-Decanol, Desmedipham, Desmetryn, Detosyl-Pyrazolate (DTP), Diallate, Diaminozid, Dicamba, Dichlobenil, Dichlorprop, Dichlorprop-P, Diclofop, Diclofopmethyl, Diclofop-P-methyl, Diclosulam, Diethatyl, Diethatylethyl, Difenoxuron, Difenzoquat, Diflufenican, Diflufenzopyr, Diflufenzopyrnatrium, Dikegulac-sodium, Dimefuron, Dimepiperate, Dimethachlor, Dimethametryn, Dimethenamid, Dimethenamid-P, Dimethipin, Dimetrasulfuron, Dinitramine, Dinoseb, Dinoterb, Diphenamid, Diisopropylnaphthalene, Dipropetryn, Diquat, Diquatdibromide, Dithiopyr, Diuron, DNOC, Eglinazineethyl, Endothal, EPTC, Esprocarb, Ethalfluralin, Ethametsulfuron, Ethametsulfuronmethyl, Ethylnaphthylacetat, Ethephon, Ethidimuron, Ethiozin, Ethofumesate, Ethoxyfen, Ethoxyfenethyl, Ethoxysulfuron, Etobenzanid, F-5331, d.h. N-[2-Chlor-4-fluor-5-[4-(3-fluorpropyl)-4,5-dihydro-5-oxo-1H-tetrazol-1-yl]-phenyl]-ethansulfonamid, F-7967, d. h. 3-[7-Chlor-5-fluor-2-(trifluormethyl)-1H-benzimidazol-4-yl]-1-methyl-6-(trifluormethyl) pyrimidin-2,4(1H,3H)-dion, Fenoprop, Fenoxaprop, Fenoxaprop-P, Fenoxapropethyl, Fenoxaprop-P-ethyl, Fenoxasulfone, Fentrazamide, Fenuron, Flamprop, Flamprop-M-isopropyl, Flamprop-M-methyl, Flazasulfuron, Florasulam, Fluazifop, Fluazifop-P, Fluazifopbutyl, Fluazifop-P-butyl, Fluazolate, Flucarbazone, Flucarbazonesodium, Flucetosulfuron, Fluchloralin, Flufenacet (Thiafluamide), Flufenpyr, Flufenpyrethyl, Flumetralin, Flumetsulam, Flumiclorac, Flumicloracpentyl, Flumioxazin, Flumipropyn, Fluometuron, Fluorodifen, Fluoroglycofen, Fluoroglycofenethyl, Flupoxam, Flupropacil, Flupropanate, Flupyrsulfuron, Flupyrsulfuronmethylsodium, Flurenol, Flurenol-butyl, Fluridone, Flurochloridone, Fluroxypyr, Fluroxypyr-meptyl, Flurprimidol, Flurtamone, Fluthiacet, Fluthiacetmethyl, Fluthiamide, Fomesafen, Foramsulfuron, Forchlorfenuron, Fosamine, Furyloxyfen, Gibberellinsäure, Glufosinate, Glufosinateammonium, Glufosinate-P, Glufosinate-P-ammonium, Glufosinate-P-natrium, Glyphosate, Glyphosate-isopropylammonium, H-9201, d. h. O-(2,4-Dimethyl-6-nitrophenyl)-O-ethylisopropylphosphor amidothioat, Halosafen, Halosulfuron, Halosulfuronmethyl, Haloxyfop, Haloxyfop-P, Haloxyfopethoxyethyl, Haloxyfop-P-ethoxyethyl, Haloxyfopmethyl, Haloxyfop-P-methyl, Hexazinone, HW-02, d. h. 1-(Dimethoxyphosphoryl)-ethyl-(2,4-dichlorphenoxy)acetat, Imazamethabenz, Imazamethabenzmethyl, Imazamox, Imazamoxammonium, Imazapic, Imazapyr, Imazapyrisopropylammonium, Imazaquin, Imazaquinammonium, Imazethapyr, Imazethapyrammonium, Imazosulfuron, Inabenfide, Indanofan, Indaziflam, Indolessigsäure (IAA), 4-Indol-3-ylbuttersäure (IBA), lodosulfuron, lodosulfuronmethyl-natrium, lofensulfuron, lofensulfuronnatrium, loxynil, Ipfencarbazone, Isocarbamid, Isopropalin, Isoproturon, Isouron, Isoxaben, Isoxachlortole, Isoxaflutole, Isoxapyrifop, KUH-043, d. h. 3-({[5-(Difluormethyl)-1-methyl-3-(trifluormethyl)-1H-pyrazol-4-yl]methyl}sulfonyl)-5,5-dimethyl-4,5-dihydro-1,2-oxazol, Karbutilate, Ketospiradox, Lactofen, Lenacil, Linuron, Maleinsäurehydrazid, MCPA, MCPB, MCPB-methyl, -ethyl und -natrium, Mecoprop, Mecopropnatrium, Mecopropbutotyl, Mecoprop-P-butotyl, Mecoprop-P-dimethylammonium, Mecoprop-P-2-ethylhexyl, Mecoprop-P-kalium, Mefenacet, Mefluidide, Mepiquat-chlorid, Mesosulfuron, Mesosulfuronmethyl, Mesotrione, Methabenzthiazuron, Metam, Metamifop, Metamitron, Metazachlor, Metazasulfuron, Methazole, Methiopyrsulfuron, Methiozolin, Methoxyphenone, Methyldymron, 1-Methylcyclopropen, Methylisothiocyanat, Metobenzuron, Metobromuron, Metolachlor, S-Metolachlor, Metosulam, Metoxuron, Metribuzin, Metsulfuron, Metsulfuronmethyl, Molinate, Monalide, Monocarbamide, Monocarbamidedihydrogensulfat, Monolinuron, Monosulfuron, Monosulfuronester, Monuron, MT-128, d. h. 6-Chlor-N-[(2E)-3-chlorprop-2-en-1-yl]-5-methyl-N-phenylpyridazin-3-amin, MT-5950, d. h. N-[3-Chlor-4-(1-methylethyl)-phenyl]-2-methylpentanamid, NGGC-011, 1-Naphtylacetic Acid (NAA), Naphthylacetamid (NAAm), 2-Naphtoxyacetic Acid, Naproanilide, Napropamide, Naptalam, NC-310, d. h. 4-(2,4-Dichlorobenzoyl)-1-methyl-5-benzyloxypyrazole, Neburon, Nicosulfuron, Nipyraclofen, Nitralin, Nitrofen, Nitroguaiacolate, Nitrophenolatnatrium (Isomerengemisch), Nitrofluorfen, Nonansäure, Norflurazon, Orbencarb, Orthosulfamuron, Oryzalin, Oxadiargyl, Oxadiazon, Oxasulfuron, Oxaziclomefone, Oxyfluorfen, Paclobutrazol, Paraquat, Paraquatdichlorid, Pelargonsäure (Nonansäure), Pendimethalin, Pendralin, Penoxsulam, Pentanochlor, Pentoxazone, Perfluidone, Pethoxamid, Phenisopham, Phenmedipham, Phenmediphamethyl, Picloram, Picolinafen, Pinoxaden, Piperophos, Pirifenop, Pirifenopbutyl, Pretilachlor, Primisulfuron, Primisulfuronmethyl, Probenazole, Profluazol, Procyazine, Prodiamine, Prifluraline, Profoxydim, Prohexadione, Prohexadionecalcium, Prohydrojasmone, Prometon, Prometryn, Propachlor, Propanil, Propaquizafop, Propazine, Propham, Propisochlor, Propoxycarbazone, Propoxycarbazonenatrium, Propyrisulfuron, Propyzamide, Prosulfalin, Prosulfocarb, Prosulfuron, Prynachlor, Pyraclonil, Pyraflufen, Pyraflufenethyl, Pyrasulfotole, Pyrazolynate (Pyrazolate), Pyrazosulfuron, Pyrazosulfuronethyl, Pyrazoxyfen, Pyribambenz, Pyribambenz-isopropyl, Pyribambenzpropyl, Pyribenzoxim, Pyributicarb, Pyridafol, Pyridate, Pyriftalid, Pyriminobac, Pyriminobac-methyl, Pyrimisulfan, Pyrithiobac, Pyrithiobacnatrium, Pyroxasulfone, Pyroxsulam, Quinclorac, Quinmerac, Quinoclamine, Quizalofop, Quizalofopethyl, Quizalofop-P, Quizalofop-P-ethyl, Quizalofop-P-tefuryl, Rimsulfuron, Saflufenacil, Secbumeton, Sethoxydim, Siduron, Simazine, Simetryn, SN-106279, d. h. Methyl-(2R)-2-({7-[2-chlor-4-(trifluormethyl)phenoxy]-2-naphthyl}oxy)propanoat, Sulcotrione, Sulfallate (CDEC), Sulfentrazone, Sulfometuron, Sulfometuronmethyl, Sulfosate (Glyphosate-trimesium), Sulfo-sulfuron, SW-065, SYN-523, SYP-249, d. h. 1-Ethoxy-3-methyl-1-oxobut-3-en-2-yl-5-[2-chlor-4-(trifluormethyl)phenoxy]-2-nitrobenzoat, SYP-300, d.h. 1-[7-Fluor-3-oxo-4-(prop-2-in-1-yl)-3,4-dihydro-2H-1,4-benzoxazin-6-yl]-3-propyl-2-thioxoimidazolidin-4,5-dion, Tebutam, Tebuthiuron, Tecnazene, Tefuryltrione, Tembotrione, Tepraloxydim, Terbacil, Terbucarb, Terbuchlor, Terbumeton, Terbuthylazine, Terbutryn, Thenylchlor, Thiafluamide, Thiazafluron, Thiazopyr, Thidiazimin, Thidiazuron, Thiencarbazone, Thiencarbazonemethyl, Thifensulfuron, Thifensulfuronmethyl, Thiobencarb, Tiocarbazil, Topramezone, Tralkoxydim, Triafamone, Triallate, Triasulfuron, Triaziflam, Triazofenamide, Tribenuron, Tribenuronmethyl, Tribufos, Trichloressigsäure (TCA), Triclopyr, Tridiphane, Trietazine, Trifloxysulfuron, Trifloxysulfuronnatrium, Trifluralin, Triflusulfuron, Triflusulfuronmethyl, Trimeturon, Trinexapac, Trinexapacethyl, Tritosulfuron, Tsitodef, Uniconazole, Uniconazole-P, Vernolate, ZJ-0862, d. h. 3,4-Dichlor-N-{2-[(4,6-dimethoxypyrimidin-2-yl)oxy]benzyl}anilin, sowie die folgenden Verbindungen:

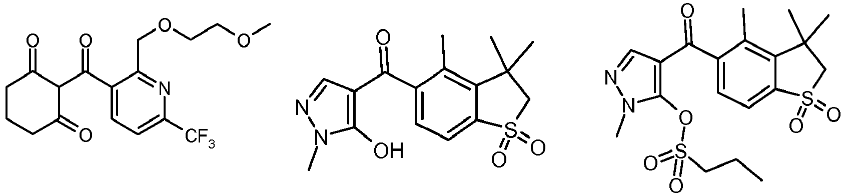

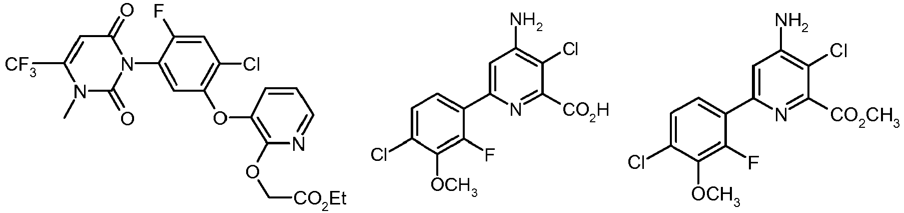

Als Beispiele für Pflanzenwuchsregulatoren seien ferner natürliche Pflanzenhormone wie Abszissinsäure, Jasmonsäure, Salicylsäure und deren Ester, Kinetin und Brassinosteroide genannt.

Weiter seien Substanzen genannt, die als Pflanzenwuchsregulatoren und/oder Pflanzenstärkungsmittel wirken können, um den Einfluss von Stressfaktoren wie Hitze, Kälte, Trockenheit, Salz, Sauerstoffmangel bzw.- Überschwemmung auf das Pflanzenwachstum zu mindern. Hier seien beispielhaft genannt Glycinbetain (Betain), Cholin, Kaliumphosphat oder andere Phosphatsalze, sowie Silikate.

Als Beispiele für Pflanzennährstoffe seien übliche anorganische oder organische Dünger zur Versorgung von Pflanzen mit Makro- und/oder Mikronährstoffen genannt.

Als Beispiele für Fungizide seien genannt:
(1) Inhibitoren der Ergosterol-Biosynthese, wie beispielsweise Aldimorph, Azaconazol, Bitertanol, Bromuconazol, Cyproconazol, Diclobutrazol, Difenoconazol, Diniconazol, Diniconazol-M, Dodemorph, Dodemorph Acetat, Epoxiconazol, Etaconazol, Fenarimol, Fenbuconazol, Fenhexamid, Fenpropidin, Fenpropimorph, Fluquinconazol, Flurprimidol, Flusilazol, Flutriafol, Furconazol, Furconazol-Cis, Hexaconazol, Imazalil, Imazalil Sulfat, Imibenconazol, Ipconazol, Metconazol, Myclobutanil, Naftifin, Nuarimol, Oxpoconazol, Paclobutrazol, Pefurazoat, Penconazol, Piperalin, Prochloraz, Propiconazol, Prothioconazol, Pyributicarb, Pyrifenox, Quinconazol, Simeconazol, Spiroxamin, Tebuconazol, Terbinafin, Tetraconazol, Triadimefon, Triadimenol, Tridemorph, Triflumizol, Triforin, Triticonazol, Uniconazol, Uniconazol-p, Viniconazol, Voriconazol, 1-(4-Chlorphenyl)-2-(1H-1,2,4-triazol-1-yl)cycloheptanol,Methyl-1-(2,2-dimethyl-2,3-dihydro-1H-inden-1-yl)-1H-imidazol-5-carboxylat, N'-{5-(Difluormethyl)-2-methyl-4-[3-(trimethylsilyl)propoxy]phenyl}-N-ethyl-N-methylimidoformamid, N-Ethyl-N-methyl-N'-{2-methyl-5-(trifluormethyl)-4-[3-(trimethylsilyl)propoxy]phenyl}imidoformamid und O-[1-(4-Methoxyphenoxy)-3,3-dimethylbutan-2-yl]-1H-imidazol-1-carbothioat.
(2) Inhibitoren der Respiration (Atmungsketten-Inhibitoren), wie beispielsweise Bixafen, Boscalid, Carboxin, Diflumetorim, Fenfuram, Fluopyram, Flutolanil, Fluxapyroxad, Furametpyr, Furmecyclox, Isopyrazam Mischung des synepimeren Razemates 1RS,4SR,9RS und des anti-empimeren Razemates 1RS,4SR,9SR, Isopyrazam (anti-epimeres Razemat), Isopyrazam (anti-epimeres Enantiomer 1R,4S,9S), Isopyrazam (anti-epimeres Enantiomer 1S,4R,9R), Isopyrazam (synepimeres Razemat 1RS,4SR,9RS), Isopyrazam (synepimeres Enantiomer 1R,4S,9R), Isopyrazam (syn-epimeres Enantiomer 1S,4R,9S), Mepronil, Oxycarboxin, Penflufen, Penthiopyrad, Sedaxane, Thifluzamid, 1-Methyl-N-[2-(1,1,2,2-tetrafluorethoxy)phenyl]-3-(trifluormethyl)-1H-pyrazol-4-carboxamid, 3-(Difluormethyl)-1-methyl-N-[2-(1,1,2,2-tetrafluorethoxy)phenyl]-1H-pyrazol-4-carboxamid, 3-(Difluormethyl)-N-[4-fluor-2-(1,1,2,3,3,3-hexafluorpropoxy)phenyl]-1-methyl-1H-pyrazol-4-carboxamid, N-[1-(2,4-Dichlorphenyl)-1-methoxypropan-2-yl]-3-(difluormethyl)-1-methyl-1 H-pyrazol-4-carboxamid, 5,8-Difluor-N-[2-(2-fluor-4-{[4-(trifluormethyl)pyridin-2-yl]oxy}phenyl)ethyl]quinazolin-4-amin, N-[9-(Dichlormethylen)-1,2,3,4-tetrahydro-1,4-methanonaphthalen-5-yl]-3-(difluormethyl)-1-methyl-1H-pyrazol-4-carboxamid, N-[(1S,4R)-9-(Dichlormethylen)-1,2,3,4-tetrahydro-1,4-methanonaphthalen-5-yl]-3-(difluormethyl)-1-methyl-1H-pyrazol-4-carboxamid und N-[(1R,4S)-9-(Dichlormethylen)-1,2,3,4-tetrahydro-1,4-methanonaphthalen-5-yl]-3-(difluormethyl)-1-methyl-1 H-pyrazol-4-carboxamid.
(3) Inhibitoren der Respiration (Atmungsketten-Inhibitoren) am Komplex III der Atumungskette, wie beispielsweise Ametoctradin, Amisulbrom, Azoxystrobin, Cyazofamid, Coumethoxystrobin, Coumoxystrobin, Dimoxystrobin, Enestroburin, Famoxadon, Fenamidon, Fenoxystrobin, Fluoxastrobin, Kresoxim-Methyl, Metominostrobin, Orysastrobin, Picoxystrobin, Pyraclostrobin, Pyrametostrobin, Pyraoxystrobin, Pyribencarb, Triclopyricarb, Trifloxystrobin, (2E)-2-(2-{[6-(3-Chlor-2-methylphenoxy)-5-fluorpyrimidin-4-yl]oxy}phenyl)-2-(methoxyimino)-N-methylethanamid, (2E)-2-(Methoxyimino)-N-methyl-2-(2-{[({(1E)-1-[3-(trifluormethyl)phenyl]ethyliden}amino)oxy]methyl}phenyl)ethanamid, (2E)-2-(Methoxyimino)-N-methyl-2-{2-[(E)-({1-[3-(trifluormethyl)phenyl]ethoxy}imino)methyl]phenyl}ethanamid, (2E)-2-{2-[({[(1E)-1-(3-{[(E)-1-Fluor-2-phenylethenyl]oxy}phenyl)ethyliden]-amino}oxy)methyl]phenyl}-2-(methoxyimino)-N-methylethanamid, (2E)-2-{2-[({[(2E,3E)-4-(2,6-Dichlorphenyl)but-3-en-2-yliden]amino}oxy)methyl]phenyl}-2-(methoxyimino)-N-methylethanamid, 2-Chlor-N-(1,1,3-trimethyl-2,3-dihydro-1H-inden-4-yl)pyridin-3-carboxamid, 5-Methoxy-2-methyl-4-(2-{[({(1E)-1-[3-(trifluormethyl)phenyl]ethyliden}amino)oxy]methyl}phenyl)-2,4-dihydro-3H-1,2,4-triazol-3-on, Methyl-(2E)-2-{2-[({cyclopropyl[(4-methoxyphenyl)imino]methyl}sulfanyl)methyl]phenyl}-3-methoxyprop-2-enoat, N-(3-Ethyl-3,5,5-trimethylcyclohexyl)-3-(formylamino)-2-hydroxybenzamid, 2-{2-[(2,5-Dimethylphenoxy)methyl]phenyl}-2-methoxy-N-methylacetamid und (2R)-2-{2-[(2,5-Dimethylphenoxy)methyl]phenyl}-2-methoxy-N-methylacetamid.
(4) Inhibitoren der Mitose und Zellteilung, wie beispielsweise Benomyl, Carbendazim, Chlorfe-nazol, Diethofencarb, Ethaboxam, Fluopicolid, Fuberidazol, Pencycuron, Thiabendazol, Thiophanat-Methyl, Thiophanat, Zoxamid, 5-Chlor-7-(4-methylpiperidin-1-yl)-6-(2,4,6-trifluorphenyl)[1,2,4]triazolo[1,5-a]pyrimidin und 3-Chlor-5-(6-chlorpyridin-3-yl)-6-methyl-4-(2,4,6-trifluorphenyl)pyridazin.
(5) Verbindungen mit Multisite-Aktivität, wie beispielsweise Bordeauxmischung, Captafol, Captan, Chlorothalonil, Kupferzubereitungen wie Kupferhydroxid, Kupfernaphthenat, Kupferoxid, Kupferoxychlorid, Kupfersulfat, Dichlofluanid, Dithianon, Dodine, Dodine freie Base, Ferbam, Fluorofolpet, Folpet, Guazatin, Guazatinacetat, Iminoctadin, Iminoctadinalbesilat, Iminoctadintriacetat, Mankupfer, Mancozeb, Maneb, Metiram, Zinkmetiram, Kupfer-Oxin, Propamidin, Propineb, Schwefel und Schwefelzubereitungen wie beispielsweise Calciumpolysulfid, Thiram, Tolylfluanid, Zineb und Ziram.
(6) Resistenzinduktoren, wie beispielsweise Acibenzolar-S-Methyl, Isotianil, Probenazol und Tiadinil.
(7) Inhibitoren der Aminosäure- und Protein-Biosynthese, wie beispielsweise Andoprim, Blasticidin-S, Cyprodinil, Kasugamycin, Kasugamycin Hydrochlorid Hydrat, Mepanipyrim, Pyrimethanil und 3-(5-Fluor-3,3,4,4-tetramethyl-3,4-dihydroisoquinolin-1-yl)quinolin.
(8) Inhibitoren der ATP Produktion, wie beispielsweise Fentin Acetat, Fentin Chlorid, Fentin Hydroxid und Silthiofam.
(9) Inhibitoren der Zellwandsynthese, wie beispielsweise Benthiavalicarb, Dimethomorph, Flumorph, Iprovalicarb, Mandipropamid, Polyoxins, Polyoxorim, Validamycin A und Valifenalat.
(10) Inhibitoren der Lipid- und Membran-Synthese, wie beispielsweise Biphenyl, Chloroneb, Dicloran, Edifenphos, Etridiazol, Iodocarb, Iprobenfos, Isoprothiolan, Propamocarb, Propamocarb Hydrochlorid, Prothiocarb, Pyrazophos, Quintozen, Tecnazene und Tolclofos-Methyl.
(11) Inhibitoren der Melanin-Biosynthese, wie beispielsweise Carpropamid, Diclocymet, Fenoxanil, Fthalid, Pyroquilon, Tricyclazol und 2,2,2-Trifluorethyl {3-methyl-1-[(4-methylbenzoyl)amino]butan-2-yl}carbamat.
(12) Inhibitoren der Nukleinsäuresynthese, wie beispielsweise Benalaxyl, Benalaxyl-M (Kiralaxyl), Bupirimat, Clozylacon, Dimethirimol, Ethirimol, Furalaxyl, Hymexazol, Metalaxyl, Metalaxyl-M (Mefenoxam), Ofurace, Oxadixyl und Oxolinsäure.
(13) Inhibitoren der Signaltransduktion, wie beispielsweise Chlozolinat, Fenpiclonil, Fludioxonil, Iprodion, Procymidon, Quinoxyfen und Vinclozolin.
(14) Entkoppler, wie beispielsweise Binapacryl, Dinocap, Ferimzon, Fluazinam und Meptyldinocap.
(15) Weitere Verbindungen, wie beispielsweise Benthiazol, Bethoxazin, Capsimycin, Carvon, Chinomethionat, Pyriofenon (Chlazafenon), Cufraneb, Cyflufenamid, Cymoxanil, Cyprosulfa-mide, Dazomet, Debacarb, Dichlorophen, Diclomezin, Difenzoquat, Difenzoquat Methylsulphat, Diphenylamin, Ecomat, Fenpyrazamin, Flumetover, Fluoromid, Flusulfamid, Flutianil, Fosetyl-Aluminium, Fosetyl-Calcium, Fosetyl-Natrium, Hexachlorbenzol, Irumamycin, Methasulfocarb, Methylisothiocyanat, Metrafenon, Mildiomycin, Natamycin, Nickel Dimethyldithiocarbamat, Nitrothal-Isopropyl, Octhilinone, Oxamocarb, Oxyfenthiin, Pentachlorphenol und dessen Salze, Phenothrin, Phosphorsäure und deren Salze, Propamocarb-Fosetylat, Propanosin-Natrium, Proquinazid, Pyrimorph, (2E)-3-(4-Tert-butylphenyl)-3-(2-chlorpyridin-4-yl)-1-(morpholin-4-yl)prop-2-en-1-on, (2Z)-3-(4-Tert-butylphenyl)-3-(2-chlorpyridin-4-yl)-1-(morpholin-4-yl)prop-2-en-1-on, Pyrrolnitrin, Tebufloquin, Tecloftalam, Tolnifanid, Triazoxid, Trichlamid, Zarilamid, (3S,6S,7R,8R)-8-Benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoat, 1-(4-{4-[(5R)-5-(2,6-Difluorphenyl)-4,5-dihydro-1,2-oxazol-3-yl]-1 ,3-thiazol-2-yl}piperidin-1-yl)-2-[5-methyl-3-(trifluormethyl)-1H-pyrazol-1-yl]ethanon, 1-(4-{4-[(5S)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-{4-[5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-Methoxyphenoxy)-3,3-dimethylbutan-2-yl-1H-imidazol-1-carboxylat, 2,3,5,6-Tetrachlor-4-(methylsulfonyl)pyridin, 2,3-Dibutyl-6-chlorthieno[2,3-d]pyrimidin-4(3H)-on, 2,6-Dimethyl-1H,5H-[1,4]dithiino[2,3-c:5,6-c']dipyrrol-1 ,3,5,7(2H,6H)-tetron, 2-[5-Methyl-3-(trifluormethyl)-1H-pyrazol-1-yl]-1-(4-{4-[(5R)-5-phenyl-4,5-dihydro-1,2-oxazol-3-yl]-1,3-thiazol-2-yl}piperidin-1-yl)ethanon, 2-[5-Methyl-3-(trifluormethyl)-1H-pyrazol-1-yl]-1-(4-{4-[(5S)-5-phenyl-4,5-dihydro-1,2-oxazol-3-yl]-1,3-thiazol-2-yl}piperidin-1-yl)ethanon, 2-[5-Methyl-3-(trifluormethyl)-1H-pyrazol-1-yl]-1-{4-[4-(5-phenyl-4,5-dihydro-1,2-oxazol-3-yl)-1,3-thiazol-2-yl]piperidin-1-yl}ethanon, 2-Butoxy-6-iod-3-propyl-4H-chromen-4-on, 2-Chlor-5-[2-chlor-1-(2,6-difluor-4-methoxyphenyl)-4-methyl-1H-imidazol-5-yl]pyridin, 2-Phenylphenol und dessen Salze, 3-(4,4,5-Trifluor-3,3-dimethyl-3,4-dihydroisoquinolin-1-yl)quinolin, 3,4,5-Trichlorpyridin-2,6-dicarbonitril, 3-[5-(4-Chlorphenyl)-2,3-dimethyl-1,2-oxazolidin-3-yl]pyridin, 3-Chlor-5-(4-chlorphenyl)-4-(2,6-difluorphenyl)-6-methylpyridazin, 4-(4-Chlorphenyl)-5-(2,6-difluorphenyl)-3,6-dimethylpyridazin, 5-Amino-1,3,4-thiadiazol-2-thiol, 5-Chlor-N'-phenyl-N'-(prop-2-in-1-yl)thiophen-2-sulfonohydrazid, 5-Fluor-2-[(4-fluorbenzyl)oxy]pyrimidin-4-amin, 5-Fluor-2-[(4-methylbenzyl)oxy]pyrimidin-4-amin, 5-Methyl-6-octyl[1,2,4]triazolo[1,5-a]pyrimidin-7-amin, Ethyl-(2Z)-3-amino-2-cyan-3-phenylprop-2-enoat, N'-(4-{[3-(4-Chlorbenzyl)-1,2,4-thiadiazol-5-yl]oxy}-2,5-dimethylphenyl)-N-ethyl-N-methylimidoformamid, N-(4-Chlorbenzyl)-3-[3-methoxy-4-(prop-2-in-1-yloxy)phenyl]propanamid, N-[(4-Chlorphenyl)(cyan)methyl]-3-[3-methoxy-4-(prop-2-in-1-yloxy)phenyl]propanamid, N-[(5-Brom-3-chlorpyridin-2-yl)methyl]-2,4-dichlorpyridin-3-carboxamid, N-[1-(5-Brom-3-chlorpyridin-2-yl)ethyl]-2,4-dichlorpyridin-3-carboxamid, N-[1-(5-Brom-3-chlorpyridin-2-yl)ethyl]-2-fluor-4-iodpyridin-3-carboxamid, N-{(E)-[(Cyclopropylmethoxy)imino][6-(difluormethoxy)-2,3-difluorphenyl]methyl}-2-phenylacetamid, N-{(Z)-[(Cyclopropyl-methoxy)¬imino][6-(difluormethoxy)-2,3-difluorphenyl]methyl}-2-phenylacetamid, N'-{4-[(3-Tert-butyl-4-cyano-1,2-thiazol-5-yl)oxy]-2-chlor-5-methylphenyl}-N-ethyl-N-methylimidoformamid, N-Methyl-2-(1-{[5-methyl-3-(trifluormethyl)-1H-pyrazol-1-yl]acetyl}piperidin-4-yl)-N-(1,2,3,4-tetrahydronaphthalen-1-yl)-1,3-thiazol-4-carboxamid, N-Methyl-2-(1-{[5-methyl-3-(trifluormethyl)-1H-pyrazol-1-yl]acetyl}¬piperidin-4-yl)-N-[(1R)-1,2,3,4-tetrahydronaphthalen-1-yl]-1,3-thiazol-4-carboxamid, N-Methyl-2-(1-{[5-methyl-3-(trifluormethyl)-1H-pyrazol-1-yl]acetyl}piperidin-4-yl)-N-[(1S)-1,2,3,4-tetrahydronaph-thalen-1-yl]-1,3-thiazol-4-carboxamid, Pentyl-{6-[({[(1-methyl-1H-tetrazol-5-yl)(phenyl)methyliden]amino}oxy)methyl]pyridin-2-yl}carbamat, Phenazin-1-carbonsäure, Chinolin-8-ol, Chinolin-8-olsulfat(2:1) und Tert-butyl {6-[({[(1-methyl-1H-tetrazol-5-yl)(phenyl)methylen]amino}oxy)methyl]pyridin-2-yl}carbamat.
(16) Weitere Verbindungen, wie beispielsweise 1-Methyl-3-(trifluormethyl)-N-[2'-(trifluormethyl)biphenyl-2-yl]-1H-pyrazol-4-carboxamid, N-(4'-Chlorbiphenyl-2-yl)-3-(difluormethyl)-1-methyl-1 H-pyrazol-4-carboxamid, N-(2',4'-Dichlorbiphenyl-2-yl)-3-(difluormethyl)-1-methyl-1 H-pyrazol-4-carboxamid, 3-(Difluormethyl)-1-methyl-N-[4'-(trifluormethyl)biphenyl-2-yl]-1H-pyrazol-4-carboxamid, N-(2',5'-Difluorbiphenyl-2-yl)-1-methyl-3-(trifluormethyl)-1H-pyrazol-4-carboxamid, 3-(Difluormethyl)-1-methyl-N-[4'-(prop-1-in-1-yl)biphenyl-2-yl]-1H-pyrazol-4-carboxamid, 5-Fluor-1 ,3-dimethyl-N-[4'-(prop-1-in-1-yl)biphenyl-2-yl]-1H-pyrazol-4-carboxamid, 2-Chlor-N-[4'-(prop-1-in-1-yl)biphenyl-2-yl]pyridin-3-carboxamid, 3-(Difluormethyl)-N-[4'-(3,3-dimethylbut-1-in-1-yl)biphenyl-2-yl]-1-methyl-1H-pyrazol-4-carboxamid, N-[4'-(3,3-Dimethylbut-1-in-1-yl)biphenyl-2-yl]-5-fluor-1,3-dimethyl-1H-pyrazol-4-carboxamid, 3-(Difluormethyl)-N-(4'-ethinylbiphenyl-2-yl)-1-methyl-1H-pyrazol-4-carboxamid, N-(4'-Ethinylbiphenyl-2-yl)-5-fluor-1,3-dimethyl-1H-pyrazol-4-carboxamid, 2-Chlor-N-(4'-ethinylbiphenyl-2-yl)pyridin-3-carboxamid, 2-Chlor-N-[4'-(3,3-dimethylbut-1-in-1-yl)biphenyl-2-yl]pyridin-3-carboxamid, 4-(Difluormethyl)-2-methyl-N-[4'-(trifluormethyl)biphenyl-2-yl]-1,3-thiazol-5-carboxamid, 5-Fluor-N-[4'-(3-hydroxy-3-methylbut-1-in-1-yl)biphenyl-2-yl]-1,3-dime¬thyl-1H-pyrazol-4-carboxamid, 2-Chlor-N-[4'-(3-hydroxy-3-methylbut-1-in-1-yl)biphenyl-2-yl]pyridin-3-carboxamid, 3-(Difluormethyl)-N-[4'-(3-methoxy-3-methylbut-1-in-1-yl)biphenyl-2-yl]-1-methyl-1H-pyrazol-4-carboxamid, 5-Fluor-N-[4'-(3-methoxy-3-methylbut-1-in-1-yl)biphenyl-2-yl]-1,3-dimethyl-1H-pyrazol-4-carboxamid, 2-Chlor-N-[4'-(3-methoxy-3-methylbut-1-in-1-yl)biphenyl-2-yl]pyridin-3-carboxamid, (5-Brom-2-methoxy-4-methylpyridin-3-yl)(2,3,4-trimethoxy-6-methylphenyl)methanon, N-[2-(4-{[3-(4-Chlorphenyl)prop-2-in-1-yl]oxy}-3-methoxyphenyl)ethyl]-N2-(methylsulfonyl)valin-amid, 4-Oxo-4-[(2-phenylethyl)amino]butansäure und But-3-yn-1-yl {6-[({[(Z)-(1-methyl-1H-tetrazol-5-yl)(phenyl)methylen]amino}oxy)methyl]pyridin-2-yl}carbamat.

Alle genannten Pestizide (1) bis (16) können, wenn sie aufgrund ihrer funktionellen Gruppen dazu imstande sind, gegebenenfalls mit geeigneten Basen oder Säuren Salze bilden.

Als Beispiele für Bakterizide seien genannt:
Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

Als Beispiele für Insektizide, Akarizide und Nematizide seien genannt:
(1) Acetylcholinesterase (AChE) Inhibitoren, wie beispielsweise Carbamate, z. B. Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC und Xylylcarb; oder
   Organophosphate, z. B. Acephate, Azamethiphos, Azinphosethyl, Azinphosmethyl, Cadusafos, Chlorethoxyfos, Chlorfenvinphos, Chlormephos, Chlorpyrifos, Chlorpyrifos-methyl, Coumaphos, Cyanophos, Demeton-S-methyl, Diazinon, Dichlorvos/DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Imicyafos, Isofenphos, Isopropyl O-(methoxyaminothio-phosphoryl) salicylat, Isoxathion, Malathion, Mecarbam, Methamidophos, Methidathion, Mevinphos, Monocrotophos, Naled, Omethoate, Oxydemeton-methyl, Parathion, Parathion-methyl, Phenthoate, Phorate, Phosalone, Phosmet, Phosphamidon, Phoxim, Pirimiphosmethyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Triclorfon und Vamidothion.
(2) GABA-gesteuerte Chlorid-Kanal-Antagonisten, wie beispielsweise Cyclodienorganochlorine, z. B. Chlordane und Endosulfan; oder Phenylpyrazole (Fiprole), z. B. Ethiprole und Fipronil.
(3) Natrium-Kanal-Modulatoren / Spannungsabhängige Natrium-Kanal-Blocker, wie beispielsweise Pyrethroide, z.B. Acrinathrin, Allethrin, d-cis-trans Allethrin, d-trans Allethrin, Bifenthrin, Bioallethrin, Bioallethrin S-cyclopentenyl Isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans-Isomere], Deltamethrin, Empenthrin [(EZ)-(1R)-Isomere), Esfenvalerate, Etofenprox, Fenpropathrin, Fenvalerate, Flucythrinate, Flumethrin, tau-Fluvalinate, Halfenprox, Imiprothrin, Kadethrin, Permethrin, Phenothrin [(1R)-trans-Isomer), Prallethrin, Pyrethrine (pyrethrum), Resmethrin, Silafluofen, Tefluthrin, Tetramethrin, Tetramethrin [(1R)-Isomere)], Tralomethrin und Transfluthrin; oder DDT; oder Methoxychlor.
(4) Nikotinerge Acetylcholin-Rezeptor (nAChR) Agonisten, wie beispielsweise Neonikotinoide, z. B. Acetamiprid, Clothianidin, Dinotefuran, Imidacloprid, Nitenpyram, Thiacloprid und Thiamethoxam; oder Nikotin.
(5) Nikotinerge Acetylcholin-Rezeptor (nAChR) allosterische Aktivatoren, wie beispielsweise Spinosine, z. B. Spinetoram und Spinosad.
(6) Chlorid-Kanal-Aktivatoren, wie beispielsweise Avermectine/Milbemycine, z. B. Abamectin, Emamectin-benzoat, Lepimectin und Milbemectin.
(7) Juvenilhormon-Imitatoren, wie beispielsweise Juvenilhormon-Analoge, z. B. Hydroprene, Kinoprene und Methoprene; oder Fenoxycarb; oder Pyriproxyfen.
(8) Wirkstoffe mit unbekannten oder nicht spezifischen Wirkmechanismen, wie beispielsweise Alkylhalide, z. B. Methylbromid und andere Alkylhalide; oder Chloropicrin; oder Sulfurylfluorid; oder Borax; oder Brechweinstein.
(9) Selektive Fraßhemmer, z. B. Pymetrozine; oder Flonicamid.
(10) Milbenwachstumsinhibitoren, z. B. Clofentezine, Hexythiazox und Diflovidazin; oder Etoxazole.
(11) Mikrobielle Disruptoren der Insektendarmmembran, z. B. Bacillus thuringiensis Subspezies israelensis, Bacillus sphaericus, Bacillus thuringiensis Subspezies aizawai, Bacillus thuringiensis Subspezies kurstaki, Bacillus thuringiensis Subspezies tenebrionis und BT Pflanzenproteine: Cry1Ab, Cry1Ac, Cry1Fa, Cry2Ab, mCry3A, Cry3Ab, Cry3Bb, Cry34/35Ab1.
(12) Inhibitoren der oxidativen Phosphorylierung, ATP-Disruptoren, wie beispielsweise Diafenthiuron; oder Organozinnverbindungen, z. B. Azocyclotin, Cyhexatin und Fenbutatin-oxid; oder Propargite; oder Tetradifon.
(13) Entkoppler der oxidativen Phoshorylierung durch Unterbrechung des H-Protongradienten, wie beispielsweise Chlorfenapyr, DNOC und Sulfluramid.
(14) Nikotinerge Acetylcholin-Rezeptor-Antagonisten, wie beispielsweise Bensultap, Cartaphydrochlorid, Thiocyclam und Thiosultap-Natrium.
(15) Inhibitoren der Chitinbiosynthese, Typ 0, wie beispielsweise Bistrifluron, Chlorfluazuron, Diflubenzuron, Flucycloxuron, Flufenoxuron, Hexaflumuron, Lufenuron, Novaluron, Noviflumuron, Teflubenzuron und Triflumuron.
(16) Inhibitoren der Chitinbiosynthese, Typ 1, wie beispielsweise Buprofezin.
(17) Häutungsstörende Wirkstoffe, Dipteran, wie beispielsweise Cyromazine.
(18) Ecdyson-Rezeptor Agonisten, wie beispielsweise Chromafenozide, Halofenozide, Methoxyfenozide und Tebufenozide.
(19) Oktopaminerge Agonisten, wie beispielsweise Amitraz.
(20) Komplex-III-Elektronentransportinhibitoren, wie beispielsweise Hydramethylnon; oder Acequinocyl; oder Fluacrypyrim.
(21) Komplex-I-Elektronentransportinhibitoren, beispielsweise METI-Akarizide, z. B. Fenazaquin, Fenpyroximate, Pyrimidifen, Pyridaben, Tebufenpyrad und Tolfenpyrad; oder Rotenone (Derris).
(22) Spannungsabhängige Natriumkanal-Blocker, z. B. Indoxacarb; oder Metaflumizone.
(23) Inhibitoren der Acetyl-CoA-Carboxylase, wie beispielsweise Tetron- und Tetramsäurederivate, z. B. Spirodiclofen, Spiromesifen und Spirotetramat.
(24) Komplex-IV-Elektronentransportinhibitoren, wie beispielsweise Phosphine, z. B. Aluminiumphosphid, Calciumphosphid, Phosphin und Zinkphosphid; oder Cyanid.
(25) Komplex-II-Elektronentransportinhibitoren, wie beispielsweise Cyenopyrafen.
(28) Ryanodinrezeptor-Effektoren, wie beispielsweise Diamide, z. B. Chlorantraniliprole und Flubendiamide.

Weitere Wirkstoffe mit unbekanntem Wirkmechanismus, wie beispielsweise Amidoflumet, Azadi-rachtin, Benclothiaz, Benzoximate, Bifenazate, Bromopropylate, Chinomethionat, Cryolite, Cyantraniliprole (Cyazypyr), Cyflumetofen, Dicofol, Diflovidazin, Fluensulfone, Flufenerim, Flufiprole, Fluopyram, Fufenozide, Imidaclothiz, Iprodione, Pyridalyl, Pyrifluquinazon und lodmethan; desweiteren Präparate auf Basis von Bacillus firmus (I-1582, Votivo) sowie folgende bekannte wirksame Verbindungen: 3-Brom-N-{2-brom-4-chlor-6-[(1-cyclopropylethyl)carbamoyl]phenyl}-1-(3-chlorpyridin-2-yl)-1H-pyrazol-5-carboxamid (bekannt aus WO2005/077934), 4-{[(6-Brompyrid-3-yl)methyl](2-fluorethyl)amino}furan-2(5H)-on (bekannt aus WO2007/115644), 4-{[(6-Fluorpyrid-3-yl)methyl](2,2-difluorethyl)amino}furan-2(5H)-on (bekannt aus WO2007/115644), 4-{[(2-Chlor-1,3-thiazol-5-yl)methyl](2-fluorethyl)amino}furan-2(5H)-on (bekannt aus WO2007/115644), 4-{[(6-Chlorpyrid-3-yl)methyl](2-fluorethyl)amino}furan-2(5H)-on (bekannt aus WO2007/115644), 4-{[(6-Chlorpyrid-3-yl)methyl](2,2-difluorethyl)amino}furan-2(5H)-on (bekannt aus WO2007/115644), 4-{[(6-Chlor-5-fluorpyrid-3-yl)methyl](methyl)amino}furan-2(5H)-on (bekannt aus WO2007/115643), 4-{[(5,6-Dichlorpyrid-3-yl)methyl](2-fluorethyl)amino}furan-2(5H)-on (bekannt aus WO2007/115646), 4-{[(6-Chlor-5-fluorpyrid-3-yl)methyl](cyclopropyl)-amino}furan-2(5H)-on (bekannt aus WO2007/115643), 4-{[(6-Chlorpyrid-3-yl)methyl](cyclopropyl)amino}furan-2(5H)-on (bekannt aus EP-A-0 539 588), 4-{[(6-Chlorpyrid-3-yl)methyl](methyl)amino}furan-2(5H)-on (bekannt aus EP-A-0 539 588), {[1-(6-Chlorpyridin-3-yl)ethyl](methyl)oxido-λ4-sulfanyliden}cyanamid (bekannt aus WO2007/149134) und seine Diastereomere {[(1R)-1-(6-Chlorpyridin-3-yl)ethyl](methyl)oxido-λ4-sulfanyliden}cyanamid (A) und {[(1S)-1-(6-Chlorpyridin-3-yl)ethyl](methyl)oxido-λ4-sulfanyliden}cyanamid (B) (ebenfalls bekannt aus WO2007/149134) sowie Sulfoxaflor (ebenfalls bekannt aus WO2007/149134) und seine Diastereomere [(R)-Methyl(oxido){(1R)-1-[6-(trifluormethyl)pyridin-3-yl]ethyl}-λ4-sulfanyliden]¬cyanamid (A1) und [(S)-Methyl(oxido){(1S)-1-[6-(trifluormethyl)pyridin-3-yl]ethyl}-λ4-sulfanyliden]cyanamid (A2), bezeichnet als Diastereomerengruppe A (bekannt aus WO 2010/074747, WO 2010/074751), [(R)-Methyl(oxido){(1S)-1-[6-(trifluormethyl)pyridin-3-yl]ethyl}-λ4-sulfanyliden]cyanamid (B1) und [(S)-Methyl(oxido){(1R)-1-[6-(trifluormethyl)pyridin-3-yl]ethyl}-λ4-sulfanyliden]cyanamid (B2), bezeichnet als Diastereomerengruppe B (ebenfalls bekannt aus WO 2010/074747, WO 2010/074751) und 11-(4-Chlor-2,6-dimethylphenyl)-12-hydroxy-1,4-dioxa-9-azadispiro[4.2.4.2]tetradec-11-en-10-on (bekannt aus WO2006/089633), 3-(4'-Fluor-2,4-dimethylbiphenyl-3-yl)-4-hydroxy-8-oxa-1-azaspiro[4.5]dec-3-en-2-on (bekannt aus WO2008/067911), 1-{2-Fluor-4-methyl-5-[(2,2,2-trifluorethyl)sulfinyl]phenyl}-3-(trifluormethyl)-1H-1,2,4-triazol-5-amin (bekannt aus WO2006/043635), [(3S,4aR,12R,12aS,12bS)-3-[(Cyclopropylcarbonyl)oxy]-6,12-dihydroxy-4,12b-dimethyl-11-oxo-9-(pyridin-3-yl)-1,3,4,4a,5,6,6a,12,12a,12b-decahydro-2H,11H-benzo[f]pyrano[4,3-b]chromen-4-yl]methylcyclopropancarboxylat (bekannt aus WO2008/066153), 2-Cyan-3-(difluormethoxy)-N,N-dimethylbenzolsulfonamid (bekannt aus WO2006/056433), 2-Cyan-3-(difluormethoxy)-N-methylbenzolsulfonamid (bekannt aus WO2006/100288), 2-Cyan-3-(difluormethoxy)-N-ethylbenzolsulfonamid (bekannt aus WO2005/035486), 4-(Difluormethoxy)-N-ethyl-N-methyl-1,2-benzothiazol-3-amin-1,1-dioxid (bekannt aus WO2007/057407), N-[1-(2,3-Dimethylphenyl)-2-(3,5-dimethylphenyl)ethyl]-4,5-dihydro-1,3-thiazol-2-amin (bekannt aus WO2008/104503), {1'-[(2E)-3-(4-Chlorphenyl)prop-2-en-1-yl]-5-fluorspiro[indol-3,4'-piperidin]-1(2H)-yl}(2-chlorpyridin-4-yl)methanon (bekannt aus WO2003/106457), 3-(2,5-Dimethylphenyl)-4-hydroxy-8-methoxy-1,8-diazaspiro[4.5]dec-3-en-2-on (bekannt aus WO2009/049851), 3-(2,5-Dimethylphenyl)-8-methoxy-2-oxo-1,8-diazaspiro[4.5]dec-3-en-4-yl-ethylcarbonat (bekannt aus WO2009/049851), 4-(But-2-in-1-yloxy)-6-(3,5-dimethylpiperidin-1-yl)-5-fluorpyrimidin (bekannt aus WO2004/099160), (2,2,3,3,4,4,5,5-Octafluorpentyl)(3,3,3-trifluorpropyl)malononitril (bekannt aus WO2005/063094), (2,2,3,3,4,4,5,5-Octafluorpentyl)(3,3,4,4,4-pentafluorbutyl)malononitril (bekannt aus WO2005/063094), 8-[2-(Cyclopropylmethoxy)-4-(trifluormethyl)phenoxy]-3-[6-(trifluormethyl)pyridazin-3-yl]-3-azabicyclo[3.2.1]octan (bekannt aus WO2007/040280), 2-Ethyl-7-methoxy-3-methyl-6-[(2,2,3,3-tetrafluor-2,3-dihydro-1,4-benzodioxin-6-yl)oxy]chinolin-4-yl-methylcarbonat (bekannt aus JP2008/110953), 2-Ethyl-7-methoxy-3-methyl-6-[(2,2,3,3-tetrafluor-2,3-dihydro-1,4-benzodioxin-6-yl)oxy]chinolin-4-ylacetat (bekannt aus JP2008/110953), PF1364 (CAS-Reg.Nr. 1204776-60-2) (bekannt aus JP2010/018586), 5-[5-(3,5-Dichlorphenyl)-5-(trifluormethyl)-4,5-dihydro-1,2-oxazol-3-yl]-2-(1H-1,2,4-triazol-1-yl)benzonitril (bekannt aus WO2007/075459), 5-[5-(2-Chlorpyridin-4-yl)-5-(trifluormethyl)-4,5-dihydro-1,2-oxazol-3-yl]-2-(1 H-1,2,4-triazol-1-yl)benzonitril (bekannt aus WO2007/075459), 4-[5-(3,5-Dichlorphenyl)-5-(trifluormethyl)-4,5-dihydro-1,2-oxazol-3-yl]-2-methyl-N-{2-oxo-2-[(2,2,2-trifluorethyl)amino]ethyl}benzamid (bekannt aus WO2005/085216), 4-{[(6-Chlorpyridin-3-yl)methyl](cyclopropyl)amino}-1,3-oxazol-2(5H)-on, 4-{[(6-Chlorpyridin-3-yl)methyl]¬(2,2-difluorethyl)amino}-1,3-oxazol-2(5H)-on, 4-{[(6-Chlorpyridin-3-yl)methyl](ethyl)amino}-1,3-oxazol-2(5H)-on, 4-{[(6-Chlorpyridin-3-yl)methyl](methyl)amino}-1,3-oxazol-2(5H)-on (alle bekannt aus WO2010/005692), NNI-0711 (bekannt aus WO2002/096882), 1-Acetyl-N-[4-(1,1,1,3,3,3-hexafluor-2-methoxypropan-2-yl)-3-isobutylphenyl]-N-isobutyryl-3,5-dimethyl-1H-pyrazol-4-carboxamid (bekannt aus WO2002/096882), Methyl-2-[2-({[3-brom-1-(3-chlorpyridin-2-yl)-1H-pyrazol-5-yl]carbonyl}amino)-5-chlor-3-methylbenzoyl]-2-methylhydrazincarboxylat (bekannt aus WO2005/085216), Methyl-2-[2-({[3-brom-1-(3-chlorpyridin-2-yl)-1H-pyrazol-5-yl]carbonyl}amino)-5-cyan-3-methylbenzoyl]-2-ethylhydrazincarboxylat (bekannt aus WO2005/085216), Methyl-2-[2-({[3-brom-1-(3-chlorpyridin-2-yl)-1H-pyrazol-5-yl]carbonyl}amino)-5-cyan-3-methylbenzoyl]-2-methylhydrazincarboxylat (bekannt aus WO2005/085216), Methyl-2-[3,5-dibrom-2-({[3-brom-1-(3-chlorpyridin-2-yl)-1H-pyrazol-5-yl]carbonyl}amino)benzoyl]-1 ,2-diethylhydrazincarboxylat (bekannt aus WO2005/085216), Methyl-2-[3,5-dibrom-2-({[3-brom-1-(3-chlorpyridin-2-yl)-1H-pyrazol-5-yl]carbonyl}amino)benzoyl]-2-ethylhydrazincarboxylat (bekannt aus WO2005/085216), (5RS,7RS;5RS,7SR)-1-(6-Chlor-3-pyridylmethyl)-1,2,3,5,6,7-hexahydro-7-methyl-8-nitro-5-propoxyimidazo[1,2-a]pyridin (bekannt aus WO2007/101369), 2-{6-[2-(5-Fluor-pyridin-3-yl)-1,3-thiazol-5-yl]pyridin-2-yl}pyrimidin (bekannt aus WO2010/006713), 2-{6-[2-(Pyridin-3-yl)-1,3-thiazol-5-yl]pyridin-2-yl}pyrimidin (bekannt aus WO2010/006713), 1-(3-Chlorpyridin-2-yl)-N-[4-cyan-2-methyl-6-(methylcarbamoyl)phenyl]-3-{[5-(trifluormethyl)-1H-tetrazol-1-yl]methyl}-1H-pyrazol-5-carboxamid (bekannt aus WO2010/069502), 1-(3-Chlorpyridin-2-yl)-N-[4-cyan-2-methyl-6-(methylcarbamoyl)phenyl]-3-{[5-(trifluormethyl)-2H-tetrazol-2-yl]methyl}-1H-pyrazol-5-carboxamid (bekannt aus WO2010/069502), N-[2-(tert-Butylcarbamoyl)-4-cyan-6-methylphenyl]-1-(3-chlorpyridin-2-yl)-3-{[5-(trifluormethyl)-1H-tetrazol-1-yl]methyl}-1H-pyrazol-5-carboxamid (bekannt aus WO2010/069502), N-[2-(tert-Butylcarbamoyl)-4-cyan-6-methylphenyl]-1-(3-chlorpyridin-2-yl)-3-{[5-(trifluormethyl)-2H-tetrazol-2-yl]methyl}-1H-pyrazol-5-carboxamid (bekannt aus WO2010/069502) und (1E)-N-[(6-Chlorpyridin-3-yl)methyl]-N'-cyan-N-(2,2-difluorethyl)ethanimidamid (bekannt aus WO2008/009360) .

Die hier mit ihrem "common name" genannten Wirkstoffe sind bekannt und beispielsweise im Pestizidhandbuch ("The Pesticide Manual" 16th Ed., British Crop Protection Council 2012) beschrieben oder im Internet recherchierbar (z. B. http://www.alanwood.net/pesticides).

Bei den Pestiziden der Komponenten c) und/oder d) kann es sich auch um eine Kombination von zwei oder von mehreren Pestiziden handeln. Solche Kombinationen sind insbesondere dann von Bedeutung, wenn es beispielsweise darum geht, das Wirkungsspektrum der Pestizid-Zusammensetzung zu verbreitern oder Resistenzen gegenüber bestimmte Pestizide besser zu unterbinden.

Die Kombination von zwei oder mehreren Pestiziden in einer Formulierung ist ein schwieriges Unterfangen. Die Wirkstoffe sind üblicherweise nicht miteinander kompatibel und die wässrigen Mischungen daher nicht phasenstabil. Die erfindungsgemäßen Adjuvant-Zusammensetzungen eignen sich aber gut dazu, um solche grundsätzlich inkompatiblen Zusammensetzungen zu stabilisieren.

In einer weiteren Ausführungsform der Erfindung enthalten die erfindungsgemäßen Pestizid-Zusammensetzungen daher mindestens zwei wasserlösliche Pestizide der Komponente c).

Weiter bevorzugt werden Zusammensetzungen, welche einen oder mehrere nicht-wasserlösliche Wirkstoffe d) enthalten.

Bei der Formulierung von wässrigen Wirkstoff-Zusammensetzungen ist man bestrebt, die Zusammensetzung mit einer möglichst hohen Konzentration an Wirkstoff zu beladen. Das reduziert Verpackungs-, Transport-, Lager- und Entsorgungskosten. Daher sollte eine Adjuvant-Zusammensetzung in der Lage sein, stabile hochbeladene Wirkstoff-Zusammensetzungen, sogenannte "High-Load-Formulierungen", zu ermöglichen. Dies gelingt mit den Tensiden der Komponente a) gegebenenfalls in Kombination mit den Alkylglucamiden der Formel (I) der Komponente e) überraschend gut.

In einer bevorzugten Ausführungsform der Erfindung beträgt die Menge des einen oder der mehreren Wirkstoffe der Komponenten c) und/oder d) in den erfindungsgemäßen Zusammensetzungen mehr als 100 g/l, besonders bevorzugt mehr als 200 g/l, ganz besonders bevorzugt mehr als 300 g/l und insbesondere bevorzugt mehr als 400 g/l. Diese Mengenangaben beziehen sich auf das Gesamtgewicht der erfindungsgemäßen Wirkstoff-Zusammensetzung und im Falle von Wirkstoffen, die in Form ihrer wasserlöslichen Salze eingesetzt werden (wie üblicherweise beispielsweise Glyphosat oder 2,4-D), auf die Menge an freier Säure, dem sogenannten Säureäquivalent ("acid equivalent", a.e.).

In einer weiteren bevorzugten Ausführungsform der Erfindung beträgt die Menge des einen oder der mehreren Tenside der Komponente a) in den erfindungsgemäßen Wirkstoff-Zusammensetzungen 20 bis 600 g/l, bevorzugt 40 bis 300 g/l und besonders bevorzugt 50 bis 150 g/l. Diese Mengenangaben beziehen sich auf die gesamte Menge der erfindungsgemäßen Wirkstoff-Zusammensetzung.

Bevorzugt werden Zusammensetzungen, die als Konzentrat-Formulierung vorliegen, welche vor dem Gebrauch verdünnt werden und 5 bis 80 Gew.-%, bevorzugt 10 bis 70 Gew. % und besonders bevorzugt 20 bis 60 Gew.-%, des einen oder der mehreren Wirkstoffe der Komponente c) und/oder d) enthalten.

Ebenfalls bevorzugt werden Zusammensetzungen, die als Spritzbrühe vorliegen und die 0,001 bis 10 Gew. %, bevorzugt 0,02 bis 3 Gew.-% und besonders bevorzugt 0,025 bis 2 Gew.-%, des einen oder der mehreren Wirkstoffe der Komponente c) und/oder d) enthalten.

Bei den gegebenenfalls in den erfindungsgemäßen Zusammensetzungen enthaltenen weiteren Hilfsstoffen h) handelt es sich um Verbindungen, die dem Formulierungsfachmann bekannt sind. Die erfindungsgemäßen Zusammensetzungen enthalten vorzugsweise ein oder mehrere solcher Hilfsstoffe h).

Der Gehalt an Komponente h) beträgt bevorzugt 1 bis 50 Gew.-%, besonders bevorzugt 2 bis 30 Gew.-%, insbesondere bevorzugt 2 bis 15 Gew.-%. Dabei beziehen sich die Mengenangaben die Gesamtmenge dieser Hilfsstoffe in einer Formulierung, bezogen auf das Gesamtgewicht der Formulierung. Die Mengen der Komponente h) können natürlich durch Verdünnen vor der Applikation entsprechend herabgesetzt werden.

Die erfindungsgemäßen Zusammensetzungen können als Komponente h) gegebenenfalls weitere übliche Formulierungshilfsmittel enthalten. Beispiele dafür sind unpolare Lösungsmittel, Inertmaterialien, wie Haft-, Netz-, Dispergier-, Emulgier-, Penetrations-, Konservierungsmittel, Füll-, Träger- und Farbstoffe, und den pH-Wert (Puffer, Säuren und Basen) oder die Viskosität beeinflussende Mittel (z. B. Verdicker), funktionelle Polymere, weitere Adjuvants und/oder Entschäumer. Übliche Formulierungshilfsmittel h) sind beispielsweise die genannten Inertmaterialien, Verdunstungshemmer, Konservierungsmittel und/oder Farbstoffe.

Bevorzugt enthalten die erfindungsgemäßen Zusammensetzungen ein oder mehrere der vorstehend genannten Komponenten h).

Eine bevorzugte Gruppe von Hilfsstoffen h) sind weitere Tenside. Dabei handelt es sich um anionaktive, nichtionogene, kationaktive und/oder zwitterionische Tenside, die sich von den Tensiden der Komponenten a) und e) unterscheiden. Beispiele für solche Tenside sind nachstehend aufgeführt (wobei jeweils EO = Ethylenoxid-Einheiten, PO = Propylenoxid-Einheiten und BO = Butylenoxid-Einheiten von Seiten der Herstellung bzw. entsprechende Alkylenoxy-Einheiten in den Tensidmolekülen bedeuten):
Eingesetzt werden können anionaktive Tenside wie beispielsweise:
   1) Anionische Derivate von Fettalkoholen mit 10 - 24 Kohlenstoffatomen mit 0 - 60 EO und/oder 0 - 20 PO und/oder 0 - 15 BO in beliebiger Reihenfolge in Form von Ethercarboxylaten, Sulfonaten, Sulfaten und Phosphaten und deren anorganischen (z. B Alkali und Erdalkali) und organischen Salzen (z. B. auf Amin- oder Alkanolaminbasis) wie Genapol® LRO, Sandopan®-Marken, Hostaphat/Hordaphos®-Marken von Clariant;
   2) anionische Derivate von Copolymeren bestehend aus EO-, PO- und/oder BO-Einheiten mit einem Molekulargewicht von 400 bis 10⁸ in Form von Ethercarboxylaten, Sulfonaten, Sulfaten und Phosphaten und deren anorganischen (z. B Alkali und Erdalkali) und organischen Salzen (z. B. auf Amin- oder Alkanolaminbasis);
   3) anionische Derivate von Alkylenoxydaddukten von C₁-C₉ Alkoholen in Form von Ethercarboxylaten, Sulfonaten, Sulfaten und Phosphaten und deren anorganischen (z. B Alkali und Erdalkali) und organischen Salzen (z. B. auf Amin- oder Alkanolaminbasis), soweit deren Strukturen nicht unter die Definition der Alkylethersulfate der Komponente (c) fallen; d1-4) anionische Derivate von Fettsäure-alkoxylaten in Form von Ethercarboxylaten, Sulfonaten, Sulfaten und Phosphaten und deren anorganischen (z. B Alkali und Erdalkali) und organischen Salzen (z. B. auf Amin- oder Alkanolaminbasis);
Eingesetzt werden können kationaktive oder zwitterionische Tenside wie beispielsweise:
   1) Alkylenoxidaddukte von Fettaminen, quartäre Ammonium-Verbindungen mit 8 bis 22 Kohlenstoffatomen (C₈-C₂₂) wie z. B. die Genamin®C-, L-, O-, T-Marken;
   2) oberflächenaktive, zwitterionische Verbindungen wie Tauride, Betaine und Sulfobetaine in Form von Tegotain®-Marken, Hostapon® T- und Arkopon® T-Marken.

Eingesetzt werden können auch nichtionogene Tenside wie beispielsweise:
1) Fettalkohole mit 8 - 24 Kohlenstoffatomen mit 0 - 60 EO und/oder 0 - 20 PO und/oder 0 - 15 BO in beliebiger Reihenfolge. Beispiele für derartige Verbindungen sind Genapol® C-, L-, O-, T-, UD-, UDD-, X-Marken, Plurafac®- und Lutensol® A-, AT-, ON-, TO-Marken, Marlipal®24 und 013 Marken, Dehypon®-Marken, Ethylan®-Marken, wie Ethylan CD 120;
2) Fettsäure- und Triglyceridalkoxylate wie die Serdox®NOG-Marken oder die Emulsogen®-Marken;
3) Fettsäureamidalkoxylate wie die Comperlan®-Marken;
4) Alkylenoxydaddukte von Alkindiolen wie die Surfynol®-Marken; Zuckerderivate wie Amino- und Amidozucker;
5) Glukitole;
6) oberflächenaktive Verbindungen auf Silikon- bzw Silanbasis wie die Tegopren®-Marken und die SE®-Marken, sowie die Bevaloid®- , Rhodorsil®- und Silcolapse®-Marken;
7) grenzflächenaktive Sulfonamide;
8) grenzflächenaktive Polyacryl- und Polymethacrylderivate wie die Sokalan®-Marken;
9) oberflächenaktive Polyamide wie modifizierte Gelatine oder derivatisierte Polyasparginsäure und deren Derivate;
10) tensidische Polyvinylverbindungen wie modifiziertes PVP wie die Luviskol®-Marken und die Agrimer®-Marken oder die derivatisierten Polyvinylacetate wie die Mowilith®-Marken oder die Polyvinyl butyrate wie die Lutonal®-Marken, die Vinnapas®- und die Pioloform®-Marken oder modifizierten Polyvinylalkohole wie die Mowiol®-Marken;
11) oberflächenaktive Polymere auf Basis von Maleinsäureanhydrid und/oder Umsetzungsprodukten von Maleinsäureanhydrid sowie Maleinsäureanhydrid und/oder Umsetzungsprodukte von Maleinsäureanhydrid beinhaltende Copolymere wie die Agrimer®-VEMA-Marken;
12) oberfächenaktive Derivate von Montan-, Polyethylen-, und Polypropylenwachsen wie die Hoechst®-Wachse oder die Licowet® und Licowax® Marken ;
13) Alkylenoxydaddukte auf Polyolbasis wie Polyglykol®-Marken;
14) grenzflächenaktive Polyglyceride und deren Derivate;
15) Alkylpolysaccharide und deren Mischungen wie beispielsweise aus der Atplus® -Reihe, vorzugsweise Atplus 435;
16) Alkylpolyglucoside in Form der Agnique®-PG Marken, beispielsweise® Agnique®-PG 8107 (Fettalkohol C₈-C₁₀-Glucosid);
17) Sorbitanester in Form der Span®- oder Tween®-Marken;
18) Cyclodextrinester oder -ether;
19) oberflächenaktive Cellulose-und Algin-, Pektin- und Guarderivate wie die Tylose®-Marken, die Manutex®-Marken und Guarderivate;
20) Alkylpolyglykosid-Alkylpolysaccharid-Mischungen auf Basis C₈-C₁₀-Fettalkohol wie Glucopon® 225 DK und Glucopon® 215 CSUP.

Bevorzugte Tenside der Komponente h) sind anionaktive Tenside, besonders bevorzugt sind Alkylpolyglykolethersulfate, insbesondere bevorzug sind Fettalkoholdiethylenglykolethersulfat (z. B. Genapol LRO®, Clariant), oder Alkylpolyglykolethercarboxylate (z. B. 2-(Isotridecyloxy-polyethylenoxy)-ethyl-carboxymethyl-ether, Marlowet 4538®, Hüls), wobei der Gehalt und die Art der zusätzlichen anionischen Tenside zweckmäßig so gewählt wird, dass kein unakzeptables Schaumverhalten der Formulierung resultiert.

Vorzugsweise enthalten die erfindungsgemäßen Zusammensetzungen Entschäumer, Farbstoffe und den pH-Wert beeinflussende Mittel als Formulierungshilfsmittel h).

Weitere mögliche Komponenten h) sind unpolare organische Lösungsmittel oder unpolare anorganische Lösungsmittel oder Gemische davon.

Beispiele für unpolare Lösungsmittel im Sinne der Erfindung sind
- aliphatische oder aromatische Kohlenwasserstoffe, wie z. B. Mineralöle bzw. Toluol, Xylole und Naphthalinderivate,
- halogenierte aliphatische oder aromatische Kohlenwasserstoffe wie Methylenchlorid bzw. Chlorbenzol,
- Öle, z. B. auf pflanzlicher Basis wie Maiskeimöl und Rapsöl, oder Ölderivate wie Rapsölmethylester.

Die erfindungsgemäßen Zusammensetzungen können als Komponente h) Entschäumer enthalten. Bei den Entschäumern kann es sich um einen einzigen Entschäumer oder um ein Gemisch zweier oder mehrerer Entschäumer handeln. Als Entschäumer eignen sich Fettsäurealkylesteralkoxylate, Organopolysiloxane wie Polydimethylsiloxane und deren Gemische mit mikrofeiner, gegebenenfalls silanierter Kieselsäure, Perfluoralkylphosphonate, Perfluoralkylphosphinate, Paraffine, Wachse und Mikrokristallinwachse und deren Gemische mit silanierter Kieselsäure. Vorteilhaft sind auch Gemische verschiedener Schauminhibitoren, beispielsweise solche aus Silikonöl, Paraffinöl und/oder Wachsen.

Die erfindungsgemäßen Zusammensetzungen können als Komponente h) gegebenenfalls Konservierungsstoffe enthalten. Bei den Konservierungsmitteln kann es sich um ein einziges Konservierungsmittel oder um ein Gemisch zweier oder mehrerer Konservierungsmittel handeln. Als Konservierungsmittel können organische Säuren und ihre Ester, beispielsweise Ascorbinsäure, Ascorbinpalmitat, Sorbat, Benzoesäure, Methyl-4-hydroxybenzoat, Propyl-4-hydroxybenzoat, Propionate, Phenol, 2-Phenylphenat, 1,2-Benzisothiazolin-3-on, Formaldehyd, schwefelige Säure und deren Salze eingesetzt werden. Als Beispiele seien Mergal K9N® (Riedel) oder Cobate C® genannt.

Die erfindungsgemäßen Zusammensetzungen können als Komponente h) gegebenenfalls Driftretardantien enthalten. Bei den Driftretardantien kann es sich um ein einziges Driftretardans oder um ein Gemisch zweier oder mehrerer Driftretardantien handeln. Als Driftretardantien können wasserlöslicher Polymere, beispielsweise Polyglycerol ester, Polyacrylamide, Acrylamid / Acrylsäurepolymere, Natriumpolyacrylat, Carboxymethyl-cellulose, Hydroxyethylcellulose, Methylcellulose, Polysaccharide, natürlicher und synthetischer guar gum eingesetzt werden. Darüber hinaus können auch bestimmte Emulsionen oder selbstemulgierende Systeme als Driftretardantien eingesetzt werden. Als Beispiel sei hier Synergen® OS von Clariant oder InterLock® (Winfield) genannt.

Bei den funktionellen Polymeren, die als Komponente h) in der erfindungsgemäßen Zusammensetzung enthalten sein können, handelt es sich hochmolekulare Verbindungen synthetischen oder natürlichen Ursprungs mit einer Molmasse von größer als 10.000. Die funktionellen Polymere können beispielsweise als Anti-Drift-Agent wirken oder die Regenfestigkeit steigern.

In einer weiteren bevorzugten Ausführungsform der Erfindung enthalten die erfindungsgemäßen Zusammensetzungen neben den Komponenten a) bis d) und gegebenenfalls e) bis g) als Komponente h) ein oder mehrere weitere Adjuvants, wie sie bekannter-maßen in wässrigen Wirkstoff-Zusammensetzungen verwendet werden können.

Bevorzugt sind dies Fettaminethoxylate, Etheraminethoxylate, Alkylbetaine oder Amidoalkylbetaine, Aminoxide oder Amidoalkylaminoxide, Alkylpolylglycoside oder Copolymere aus Glycerin, Kokosfettsäure und Phthalsäure.

Diese Adjuvants sind aus der Literatur als Adjuvants in wässrigen Pestizid-Zusammensetzungen bekannt und beispielsweise in der WO2009/029561 beschrieben.

Die erfindungsgemäßen Zusammensetzungen können in der Form von Konzentraten bis zu 50 Gew. % an einem oder mehreren Formulierungshilfsmitteln der Komponente h) enthalten, bevorzugt bis zu 30 Gew.-%, und besonders bevorzugt bis zu 15 Gew.-%. Dabei beziehen sich die Mengenangaben auf das Gesamtgewicht der Zusammensetzung. Die Mengen der Komponente h) können natürlich durch Verdünnen vor der Applikation entsprechend herabgesetzt werden.

Der pH-Wert der erfindungsgemäßen Zusammensetzungen liegt üblicherweise im Bereich von 3,5 bis 8,5, bevorzugt bei 4,0 bis 8,0 und besonders bevorzugt bei 4,5 bis 6,5 (gemessen als 1 gew.-%ige wässrige Verdünnung). Der pH-Wert wird primär bestimmt durch die pH-Werte der Lösungen der wässrigen Wirkstoffe, die als Salze schwacher Säuren vorliegen. Durch Zugabe von Säuren oder Basen kann der pH-Wert auf einen anderen Wert abweichend von dem ursprünglichen pH-Wert der Mischung eingestellt werden.

In einer weiteren bevorzugten Ausführungsform der Erfindung liegen die erfindungsgemäßen Zusammensetzungen als Konzentrat-Formulierungen vor, die vor dem Gebrauch verdünnt werden, insbesondere mit Wasser (beispielsweise "ready-to-use"-, "in-can"- oder "built-in"-Formulierungen), und enthalten das eine oder die mehreren wasserlöslichen Wirkstoffe der Komponente d1) im Allgemeinen in Mengen von 5 bis 80 Gew.-%, bevorzugt von 10 bis 70 Gew.-% und besonders bevorzugt von 20 bis 60 Gew.-%. Diese Mengenangaben beziehen sich auf die gesamte Konzentrat-Formulierung und im Falle von Pestiziden, die in Form ihrer wasserlöslichen Salze eingesetzt werden, auf die Menge an freier Säure, dem sogenannten Säureäquivalent ("acid equivalent", a.e.).

Die erfindungsgemäßen Wirkstoff-Zusammensetzungen werden vorzugsweise in Form von Spritzbrühen auf die Felder ausgebracht. Dabei werden die Spritzbrühen durch Verdünnung von Konzentrat-Formulierungen mit einer definierten Menge Wasser hergestellt.

Die Erfindung betrifft weiterhin die Verwendung der oben beschriebenen Adjuvant-Zusammensetzung zur Verbesserung der Pflanzenbenetzbarkeit durch eine Reduzierung der dynamischen Oberflächenspannung, insbesondere von Wirkstoff-Zusammensetzungen mit hohem Elektrolytgehalt.

Außerdem betrifft die Erfindung die Verwendung der oben beschriebenen Adjuvant-Zusammensetzung zur Verbesserung des Benetzungsvermögens von topisch applizierbaren Wirkstoff-Zusammensetzungen, insbesondere von blattapplizierbaren Wirkstoff-Zusammensetzungen.

Die erfindungsgemäßen Adjuvant-Zusammensetzungen werden vorzugsweise zur Herstellung von wässrigen Wirkstoff-Zusammensetzungen verwendet.

Besonders bevorzugt handelt es sich dabei um den Einsatz von agrochemischen Wirkstoffen, bevorzugt Pestiziden, besonders bevorzugt wasserlöslichen Pestiziden und ganz besonders bevorzugt wasserlöslichen Herbiziden.

Außerdem werden die oben beschriebenen Zusammensetzungen zur Kontrolle und/oder zur Bekämpfung von unerwünschtem Pflanzenwuchs, Pilzerkrankungen oder Insektenbefall bei Pflanzen eingesetzt, vorzugsweise zur Kontrolle und/oder zur Bekämpfung von unerwünschtem Pflanzenwuchs.

Diese Verwendungen können vorzugsweise auch im sogenannten Tank-mix-Verfahren stattfinden. Hierbei können also das oder die mehreren wasserlöslichen Pestizide der Komponente d1) und die Komponenten a) bis c) auch in Form einer sogenannten "Tank-mix"- Zubereitung vorliegen. In einer derartigen Zubereitung liegen sowohl das oder die mehreren wasserlöslichen Pestizide c) als auch die Komponenten a) bis b) getrennt voneinander vor. Beide Zubereitungen werden vor dem Ausbringen, in der Regel kurz vorher, miteinander vermischt, wobei eine erfindungsgemäße Pestizid-Zusammensetzung entsteht.

Die Erfindung betrifft darüber hinaus ein Verfahren zum Schutz von Pflanzen vor Schadorganismen, bei dem man die Pflanze, die Schadorganismen oder deren Lebensraum mit einer der oben beschriebenen Zusammensetzungen in Kontakt bringt.

Ausführungsbeispiele
- Tabelle 1: Wirksamkeit von Herbizid Glufosinat-ammonium appliziert auf eine Wirkstoffkonzentration von 400 g in der Spritzflüssigkeit gegen Rumex sp. Unkräuter. Emulsogen PF20S wurde in den Tank zugegeben. Die in der nachstehenden Tabelle angegebenen Zahlenwerte sind das arithmetische Mittel aus jeweils drei Versuchen.

**Tabelle 1**

| Beispiel | Formulierung | Testprodukt | Konzentration Testprodukt in Spritzbrühe [g/l] | Unkrautkontrolle in % nach Zeit [400 g/ha ai] | | |
|---|---|---|---|---|---|---|
| | | | | 2 Tage | 8 Tage | 15 Tage |
| | Kontrolle | | | 0,00 | 0,00 | 0,00 |
| V1 | Marktstandard Glufosinateammonium SL 200 (2 l/ha) | ---- | | 10,00 | 80,00 | 70,00 |
| V2 | Marktstandard Glufosinateammonium SL 280 (1,43 l/ha) | ----- | | 10,00 | 83.33 | 71,67 |
| V3 | Glufosinateammonium SL 280 (1,43 l/ha) | Genapol LRO | 3,2 | 5,00 | 83,33 | 75,00 |
| 1 | Glufosinateammonium SL 280 (1,43 l/ha) | Emulsogen PF20S | 0,64 | 16,67 | 85,00 | 85,00 |
| 2 | Glufosinateammonium SL 280 (1,43 l/ha) | Emulsogen PF20S | 1,6 | 16,67 | 85,00 | 86,67 |
| 3 | Glufosinateammonium SL 280 (1,43 l/ha) | Emulsogen PF20S | 3,2 | 13,33 | 80,00 | 80,00 |

Die Tabelle 1 zeigt eine höhere Wirksamkeit von Glufosinateammonium in Anwesenheit von Emulsogen PF20S. Die erfindungsgemäßen Zusammensetzungen waren schneller und zeigten die höchste und längste Unkrautkontrolle. Diese Zusammensetzungen waren besser als alle Marktstandardprodukte.

Die in der Tabelle 1 gelisteten Feldergebnisse zeigen, dass Polyalkylenglykolethersulfatsalze sich vorteilhaft in wässrigen Systemen mit hohem Elektrolytgehalt einsetzen lassen. Dieses trifft auch zu auf andere wässrige Zubereitungen enthaltend Polyalkylenglykolethersulfatsalze, wie EmulsogenPF20S, und wasserlösliche Salze oder Säuren von Herbiziden, wie Auxinen, Glufosinat, Glyphosat oder Mesotrione und deren Kombinationen. Dabei kann es sich um anwendungsfertige Verdünnungen oder deren Konzentrate bzw. Vorlösungen handeln. Hervorzuheben sind die Kombination von hohem Trübungspunkt (>100 °C), geringer dynamischer Oberflächenspannung, guter Pflanzenverträglichkeit und günstiger toxikologischer Einstufung, die einen nachhaltigen Einsatz von Agrochemikalien fördern.

Das gilt in Verwendung als Tank mix Adjuvant aber auch dann, wenn Emulsogen PF20 S in die Formulierung eingebaut ist. Emulsogen PF20 S bildet mit Glyphosatsalzen sowie mit unterschiedlichen weiteren Tensiden in verschiedenen Konzentrationen stabile Formulierungen und man kann dabei mit hohen Elektrolytkonzentrationen arbeiteten. Hervorzuheben sind der hohe Trübungspunkt (>100 °C) und die geringe dynamische Oberflächenspannung von Emulsogen PF20 S. Diese beträgt in wässriger Lösung bei einer Konzentration von 0,5 g/l nach 200 msec weniger als 55 mN/m.

### Beispiele 4 - 8

Es wurden weitere Formulierungen von Glufosinat-Ammonium hergestellt. Die einzelnen Bestandteile sowie deren Mengen in den einzelnen Formulierungen sind in der nachstehenden Tabelle 2 aufgelistet.

Bei den Formulierungen der Beispiele 4 bis 8 handelte es sich um Glufosinat SL200 Formulierungen mit 5 % Aktivsubstanz Polyalkylenglykolethersulfat-Ammonium (= Emulsogen PF20S) und Synergen GA oder dem Alkylpolyglucosid Agnique PG8105.

Alle Formulierungen waren stabil einphasig und transparent (ohne Trübung) im Temperaturbereich zwischen -10 °C (8 Wochen), Raumtemperatur (8 Wochen) und 54 °C (2 Wochen). Der pH Wert betrug 6 und konnte im Bereich von pH 4,5 - 8,5 variiert werden. Weitere Eigenschaften dieser Formulierungen sind in der nachfolgenden Tabelle 2 aufgeführt.

**Tabelle 2**

| Beispiel Nr. | 4 | 5 | 6 | 7 | 8 |
|---|---|---|---|---|---|
| Glufosinat-Ammonium (50 %ig) | 35,00 | 35,00 | 35,00 | 35,00 | 35,00 |
| Emulsogen PF20S (50 %ig) | 10,00 | 10,00 | 10,00 | 10,00 | 10,00 |
| Propylen glykol | 10,00 | 10,00 | 10,00 | 10,00 | 10,00 |
| DI-Wasser | 36,98 | 33,98 | 33,98 | 31,50 | 29.00 |
| Di-Ammoniumhydrogencitrat | | 1,00 | 1,00 | 1,00 | 1,00 |
| Synergen GA | 8,00 | | 10,00 | | |
| C810 Alkylpolyglucosid (Agnique PG8105, BASF) | | 10,00 | | 12,50 | 15,00 |
| Entschäumer Momentive SAG 1572 | 0,02 | 0,02 | 0,02 | | |
| | 100,00 | 100,00 | 100,00 | 100,00 | 100,00 |
| pH (1 %ige Formulierung; E-Wasser) | 6 | 6 | 6 | 6 | 6 |
| Stabilität (8 Wochen) -10 °C | flüssig | flüssig | flüssig | flüssig | flüssig |
| Stabilität (8 Wochen) RT (25 °C) | ok | ok | ok | ok | ok |
| Stabilität (2 Wochen) 54 °C | ok | ok | ok | ok | ok |

### Beispiel 9

Bei der Formulierung dieses Beispiels handelte es sich um eine Glyphosat-K Formulierung mit Aktivsubstanz Polyalkylenglykolethersulfat-Ammonium (= Emulsogen PF20S) und Synergen GL8 (= C810, Alkyldimethyl-(hydroxyethyl)-ammoniumchlorid). Die einfache kostengünstige und stabile Formulierung einer SL540 Formulierung von Glyphosat Kalium enthielt
- 84.5 % Glyphosat K (58 %),
- 6 % Synergen GL8,
- 3 % Emulsogen PF20S (Polyalkylenglykolethersulfat-Ammonium), und
- Wasser auf 100 %.

Optional konnte Entschäumer hinzugefügt werden.

Die Formulierung war stabil einphasig und transparent (ohne Trübung) im Temperaturbereich zwischen -10 °C (8 Wochen), Raumtemperatur (8 Wochen) und 40 °C (8 Wochen).

Der nicht eingestellte pH Wert betrug 4,3 und konnte im Bereich von pH 4,0 - 8,5 variiert werden.

### Beispiel 10

Bei der Formulierung dieses Beispiels handelte es sich um eine Glyphosat-K Formulierung mit Aktivsubstanz Polyalkylenglykolethersulfat-Kalium (= Tivogen PFK) und Synergen GL8 (= C810, Alkyldimethyl(hydroxyethyl)ammoniumchlorid).

Die einfache kostengünstige und stabile Formulierung einer SL540 Formulierung von Glyphosat Kalium enthielt
- 84.5 % Glyphosat K (58 %),
- 6 % Synergen GL8,
- 3 % Tivogen PFK (Polyalkylenglykolethersulfat-Kalium), und
- Wasser auf 100 %

Optional konnte Entschäumer hinzugefügt werden.

Die Formulierung war stabil einphasig und transparent (ohne Trübung) im Temperaturbereich zwischen -10 °C (8 Wochen), Raumtemperatur (8 Wochen) und 40 °C (8 Wochen). Der nicht eingestellte pH Wert betrug 4,3 und konnte im Bereich von pH 4.0 - 8.5 variiert werden.

Alle Formulierungen der Beispiele 4 bis 10 waren zwischen -10 bis +40 °C und wo bestimmt bis +54 °C stabil und ergaben nach Verdünnung mit Wasser bei wirkstofftypischen Herbizidwirkstoffkonzentrationen von 1,5 - 10 g/l Glufosinat (Säureäquilvalent) bzw. 5 - 50 g/l Glyphosat (Säureäquilvalent) wässrige Lösungen mit dynamischen Oberflächenspannungen unter 50 mN/m und besitzen damit hervorragende Netzeigenschaften für monokotyle und dicotyle Unkräuter und alle Kulturpflanzen.

## Patentansprüche

1. Adjuvant-Zusammensetzung, enthaltend
a) ein oder mehrere Polyalkylenglykolethersulfatsalze oder Polyalkylenglykolethersulfonatsalze,
b) Wasser, und
c) ein oder mehrere in Ionen dissoziierte Elektrolyte, die ausgewählt sind aus der Gruppe der wasserlöslichen Wirkstoffe,
wobei die Komponente a) wiederkehrende Struktureinheiten aus der Gruppe Ethylenoxid-, Propylenoxid- und/oder Butylenoxid-Einheiten enthält.

2. Adjuvant-Zusammensetzung nach Anspruch 1, **dadurch gekennzeichnet, dass** Komponente a) Ethylenoxid- und Propylenoxid-Einheiten enthält.

3. Adjuvant-Zusammensetzung nach Anspruch 2, **dadurch gekennzeichnet, dass** Komponente a) Blöcke von Ethylenoxid-Einheiten und von Propylenoxid-Einheiten enthält.

4. Adjuvant-Zusammensetzung nach einem oder mehreren der Ansprüche 1 bis 3, **dadurch gekennzeichnet, dass** das Polyalkylenglykolethersulfatsalz ein Alkali-, Erdalkali- und/oder Ammoniumsalz ist.

5. Adjuvant-Zusammensetzung nach einem oder mehreren der Ansprüche 1 bis 4, **dadurch gekennzeichnet, dass** der Anteil des einen oder der mehreren Polyalkylenglykolethersulfatsalze oder -sulfonatsalze a) 2 bis 60 Gew.-%, bezogen auf das Gesamtgewicht der Zusammensetzung, beträgt.

6. Adjuvant-Zusammensetzung nach einem oder mehreren der Ansprüche 1 bis 5, **dadurch gekennzeichnet, dass** der Anteil des Wassers b) bis 70 Gew.-%, bezogen auf das Gesamtgewicht der Zusammensetzung, beträgt.

7. Adjuvant-Zusammensetzung nach einem oder mehreren der Ansprüche 1 bis 5, **dadurch gekennzeichnet, dass** der Anteil des einen oder der mehreren Elektrolyte c) 10 bis 90 Gew.-%, bezogen auf das Gesamtgewicht der Zusammensetzung, beträgt.

8. Adjuvant-Zusammensetzung nach einem oder mehreren der Ansprüche 1 bis 7, **dadurch gekennzeichnet, dass** der Elektrolyt c) ausgewählt wird aus der Gruppe der Alkalimetallsalze, der Erdalkalimetallsalze und/oder der Ammoniumsalze von anorganischen und/oder organischen Anionen.

9. Zusammensetzung enthaltend Komponenten a), b) und c) nach Anspruch 1 und zusätzlich mindestens einen nicht-wasserlöslichen Wirkstoff d).

10. Zusammensetzung nach Anspruch 1, **dadurch gekennzeichnet, dass** der wasserlösliche Wirkstoff c) und/oder der nicht-wasserlösliche Wirkstoff d) ausgewählt wird aus der Gruppe bestehend aus agrochemischen Wirkstoffen, Bioziden und Repellents, besonders aus Pestiziden und insbesondere aus Herbiziden, Fungiziden und Insektiziden.

11. Zusammensetzung nach einem der Ansprüche 1 bis 10, **dadurch gekennzeichnet, dass** diese neben den Komponenten a) bis c) und gegebenenfalls d) mindestens eine der zusätzlichen Komponenten e) bis g) enthält
e) ein oder mehrere Alkylglucamide der Formel (I) 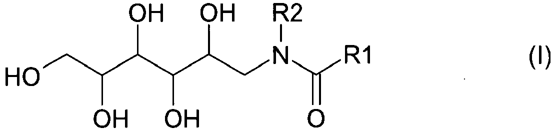 worin
R1 für eine lineare oder verzweigte Alkylgruppe mit 5 bis 12 Kohlenstoffatomen steht,
R2 für eine Alkylgruppe mit 1 bis 3 Kohlenstoffatomen steht,
f) Propylenglykol, Dipropylenglykol, Mischungen aus Propylenglykol und Dipropylenglykol, jeweils gegebenenfalls in Mischung mit Polypropylenglykol und/oder Polyethylenglykol, jeweils mit bis zu zehn Wiederholeinheiten,
g) ein oder mehrere CoSolventien, und/oder
h) ein oder mehrere Hilfsstoffe.

12. Zusammensetzung nach einem der Ansprüche 1 bis 11, **dadurch gekennzeichnet, dass** diese ein oder mehrere wasserlösliche Pestizide c) und gegebenenfalls ein oder mehrere nicht-wasserlösliche Pestizide d) enthält.

13. Zusammensetzung nach Anspruch 12, **dadurch gekennzeichnet, dass** das eine oder die mehreren wasserlöslichen Pestizide der Komponente c) ausgewählt sind aus der Gruppe der Herbizide.

14. Zusammensetzung nach Anspruch 13, **dadurch gekennzeichnet, dass** das eine oder die mehreren wasserlöslichen Pestizide der Komponente c) ausgewählt sind aus wasserlöslichen Salzen von 2,4-D, Bentazon, Dicamba, Fomesafen, Glyphosat, Glufosinat, MCPA, Mesotrione Paraquat und Sulcotrione.

15. Zusammensetzung nach einem der Ansprüche 1 bis 14, **dadurch gekennzeichnet, dass** das die Gesamtmenge der Wirkstoffe Komponenten c) und/oder d) in der Zusammensetzung größer als 100 g/l, bezogen auf deren Säureäquivalent, beträgt.

16. Zusammensetzung nach einem der Ansprüche 1 bis 15, **dadurch gekennzeichnet, dass** sie als Konzentrat-Formulierung vorliegt, die vor dem Gebrauch verdünnt wird und 5 bis 80 Gew.-% des einen oder der mehreren Wirkstoffe der Komponente c) und/oder d) enthält.

17. Zusammensetzung nach einem der Ansprüche 1 bis 15, **dadurch gekennzeichnet, dass** sie als Spritzbrühe vorliegt und die 0,001 bis 10 Gew. % des einen oder der mehreren Wirkstoffe der Komponente c) und/oder d) enthält.

18. Zusammensetzung nach einem der Ansprüche 1 bis 17, **dadurch gekennzeichnet, dass** diese ein oder mehrere übliche Formulierungshilfsmittel h) enthält, die ausgewählt werden aus der Gruppe bestehend aus unpolaren Lösungsmitteln, Inertmaterialien, insbesondere Haft-, Netz-, Dispergier-, Emulgier-, Penetrations-, Konservierungsmitteln, Füll-, Träger- und Farbstoffen, und den pH-Wert oder die Viskosität beeinflussenden Mitteln, funktionellen Polymeren, weiteren Adjuvants und/oder Entschäumern.

19. Verwendung einer Adjuvant-Zusammensetzung nach einem oder mehreren der Ansprüche 1 bis 8 zur Verbesserung der Pflanzenbenetzbarkeit durch eine Reduzierung der dynamischen Oberflächenspannung.

20. Verwendung einer Adjuvant-Zusammensetzung nach einem oder mehreren der Ansprüche 1 bis 8 zur Verbesserung des Benetzungsvermögens von topisch applizierbaren Wirkstoff-Zusammensetzungen.

21. Verwendung einer Adjuvant-Zusammensetzung nach einem oder mehreren der Ansprüche 1 bis 8 zur Herstellung von wässrigen Wirkstoff-Zusammensetzungen.

22. Verwendung nach Anspruch 21, **dadurch gekennzeichnet, dass** die Wirkstoffe wasserlösliche Herbizide sind.

23. Verwendung einer Zusammensetzung nach einem der Ansprüche 1 bis 18 zur Kontrolle und/oder zur Bekämpfung von unerwünschtem Pflanzenwuchs, Pilzerkrankungen oder Insektenbefall bei Pflanzen.

24. Verfahren zum Schutz von Pflanzen vor Schadorganismen, **dadurch gekennzeichnet, dass** man die Pflanze, die Schadorganismen oder deren Lebensraum mit einer Zusammensetzung nach einem der Ansprüche 1 bis 18 in Kontakt bringt.

## Claims

1. Adjuvant composition comprising
a) one or more polyalkylene glycol ether sulfate salts or polyalkylene glycol ether sulfonate salts,
b) water, and
c) one or more electrolytes dissociated into ions, which electrolytes are selected from the group of the water-soluble active ingredients,
wherein component a) comprises repeat structural units from the group of ethylene oxide units, propylene oxide units and/or butylene oxide units.

2. Adjuvant composition according to Claim 1, **characterized in that** component a) comprises ethylene oxide units and propylene oxide units.

3. Adjuvant composition according to Claim 2, **characterized in that** component a) contains blocks of ethylene oxide units and of propylene oxide units.

4. Adjuvant composition according to one or more of Claims 1 to 3, **characterized in that** the polyalkylene glycol ether sulfate salt is an alkali metal salt, alkaline earth metal salt and/or ammonium salt.

5. Adjuvant composition according to one or more of Claims 1 to 4, **characterized in that** the proportion of the one or more polyalkylene glycol ether sulfate salts or sulfonate salts a) is 2% to 60% by weight, based on the total weight of the composition.

6. Adjuvant composition according to one or more of Claims 1 to 5, **characterized in that** the proportion of water b) is up to 70% by weight, based on the total weight of the composition.

7. Adjuvant composition according to one or more of Claims 1 to 5, **characterized in that** the proportion of the one or more electrolytes c) is 10% to 90% by weight, based on the total weight of the composition.

8. Adjuvant composition according to one or more of Claims 1 to 7, **characterized in that** the electrolyte c) is selected from the group of the alkali metal salts, the alkaline earth metal salts and/or the ammonium salts of inorganic and/or organic anions.

9. Composition comprising components a), b) and c) according to Claim 1 and additionally at least one water-insoluble active ingredient d).

10. Composition according to Claim 1, **characterized in that** the water-soluble active ingredient c) and/or the water-insoluble active ingredient d) is selected from the group consisting of active agrochemical ingredients, biocides and repellents, particularly from pesticides and especially from herbicides, fungicides and insecticides.

11. Composition according to any of Claims 1 to 10, **characterized in that** it comprises, in addition to components a) to c) and optionally d), at least one of the additional components e) to g)
e) one or more alkylglucamides of the formula (I) 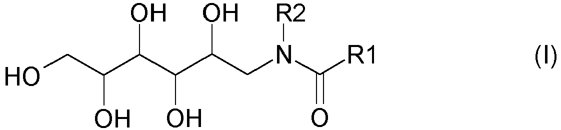 in which
R1 is a linear or branched alkyl group having 5 to 12 carbon atoms,
R2 is an alkyl group having 1 to 3 carbon atoms,
f) propylene glycol, dipropylene glycol, mixtures of propylene glycol and dipropylene glycol, each optionally in a mixture with polypropylene glycol and/or polyethylene glycol, each having up to ten repeat units,
g) one or more cosolvents, and/or
h) one or more auxiliaries.

12. Composition according to any of Claims 1 to 11, **characterized in that** it comprises one or more water-soluble pesticides c) and optionally one or more water-insoluble pesticides d).

13. Composition according to Claim 12, **characterized in that** the one or more water-soluble pesticides of component c) are selected from the group of the herbicides.

14. Composition according to Claim 13, **characterized in that** the one or more water-soluble pesticides of component c) are selected from water-soluble salts of 2,4-D, bentazon, dicamba, fomesafen, glyphosate, glufosinate, MCPA, mesotrione, paraquat and sulcotrione.

15. Composition according to any of Claims 1 to 14, **characterized in that** the total amount of the active ingredients components c) and/or d) in the composition is greater than 100 g/l, based on the acid equivalent thereof.

16. Composition according to any of Claims 1 to 15, **characterized in that** it takes the form of a concentrate formulation which is diluted prior to use and contains 5% to 80% by weight of the one or more active ingredients of component c) and/or d).

17. Composition according to any of Claims 1 to 15, **characterized in that** it takes the form of a spray liquor and which contains 0.001% to 10% by weight of the one or more active ingredients of component c) and/or d).

18. Composition according to any of Claims 1 to 17, **characterized in that** it comprises one or more customary formulation auxiliaries h) that are selected from the group consisting of nonpolar solvents, inert materials, especially stickers, wetters, dispersants, emulsifiers, penetrants, preservatives, fillers, carriers and dyes, and agents that affect the pH or the viscosity, functional polymers, further adjuvants and/or defoamers.

19. Use of an adjuvant composition according to one or more of Claims 1 to 8 for improving plant wettability by a reduction in dynamic surface tension.

20. Use of an adjuvant composition according to one or more of Claims 1 to 8 for improving the wetting capacity of topically applicable active ingredient compositions.

21. Use of an adjuvant composition according to one or more of Claims 1 to 8 for production of aqueous active ingredient compositions.

22. Use according to Claim 21, **characterized in that** the active ingredients are water-soluble herbicides.

23. Use of a composition according to any of Claims 1 to 18 for control and/or for abatement of unwanted plant growth, fungal disorders or insect infestation in plants.

24. Method of protecting plants from harmful organisms, **characterized in that** the plant, the harmful organisms or their habitat is/are brought into contact with a composition according to any of Claims 1 to 18.

## Revendications

1. Composition d'adjuvant, contenant
a) un ou plusieurs sels de polyalkylèneglycoléthersulfates ou sels de polyalkylèneglycoléthersulfonates,
b) de l'eau, et
c) un ou plusieurs électrolytes dissociés en ions, qui sont choisis dans le groupe des substances actives hydrosolubles,
le composant a) contenant des motifs structuraux répétitifs choisis dans le groupe des unités oxyde d'éthylène, oxyde de propylène et/ou oxyde de butylène.

2. Composition d'adjuvant selon la revendication 1, **caractérisée en ce que** le composant a) contient des unités oxyde d'éthylène et oxyde de propylène.

3. Composition d'adjuvant selon la revendication 2, **caractérisée en ce que** le composant a) contient des blocs d'unités oxyde d'éthylène et d'unités oxyde de propylène.

4. Composition d'adjuvant selon une ou plusieurs des revendications 1 à 3, **caractérisée en ce que** le sel de polyalkylèneglycoléthersulfate est un sel de métal alcalin, de métal alcalino-terreux et/ou d'ammonium.

5. Composition d'adjuvant selon une ou plusieurs des revendications 1 à 4, **caractérisée en ce que** la proportion dudit un ou desdits plusieurs sels de polyalkylèneglycoléthersulfates ou sels de polyalkylèneglycoléthersulfonates a) vaut de 2 à 60 % en poids, par rapport au poids total de la composition.

6. Composition d'adjuvant selon une ou plusieurs des revendications 1 à 5, **caractérisée en ce que** la proportion de l'eau b) vaut jusqu'à 70 % en poids, par rapport au poids total de la composition.

7. Composition d'adjuvant selon une ou plusieurs des revendications 1 à 5, **caractérisée en ce que** la proportion dudit un ou desdits plusieurs électrolytes c) vaut de 10 à 90 % en poids, par rapport au poids total de la composition.

8. Composition d'adjuvant selon une ou plusieurs des revendications 1 à 7, **caractérisée en ce que** l'électrolyte c) est choisi dans le groupe des sels de métaux alcalins, des sels de métaux alcalino-terreux et/ou des sels d'ammonium d'anions organiques et/ou inorganiques.

9. Composition contenant les composants a), b) et c) selon la revendication 1 et en outre au moins une substance active d) insoluble dans l'eau.

10. Composition selon la revendication 1, **caractérisée en ce que** la substance active hydrosoluble c) et/ou la substance active d) insoluble dans l'eau est/sont choisie(s) dans le groupe constitué par les substances actives, biocides et répulsifs, agrochimiques, en particulier parmi les pesticides et plus particulièrement parmi les herbicides, fongicides et insecticides.

11. Composition selon l'une quelconque des revendications 1 à 10, **caractérisée en ce qu'**en plus des composants a) à c) et éventuellement d) celle-ci contient au moins un des composants supplémentaires e) à g)
e) un ou plusieurs alkylglucamides de formule (1) 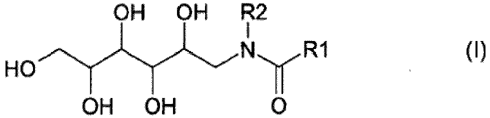 dans laquelle
R1 représente un groupe alkyle linéaire ou ramifié ayant de 5 à 12 atomes de carbone,
R2 représente un groupe alkyle ayant de 1 à 3 atomes de carbone,
f) du propylèneglycol, du dipropylèneglycol, des mélanges de propylèneglycol et dipropylèneglycol, chaque fois éventuellement en mélange avec du polypropylèneglycol et/ou du polyéthylèneglycol, comportant chacun jusqu'à dix motifs répétitifs.
g) un ou plusieurs co-solvants, et/ou
h) une ou plusieurs substances auxiliaires.

12. Composition selon l'une quelconque des revendications 1 à 11, **caractérisée en ce que** celle-ci contient un ou plusieurs pesticides hydrosolubles c) et éventuellement un ou plusieurs pesticides d) insolubles dans l'eau.

13. Composition selon la revendication 12, **caractérisée en ce que** ledit un ou lesdits plusieurs pesticides hydrosolubles du composant c) sont choisis dans le groupe des herbicides.

14. Composition selon la revendication 13, **caractérisée en ce que** ledit un ou lesdits plusieurs pesticides hydrosolubles du composant c) sont choisis parmi les sels hydrosolubles de 2,4-D, bentazone, dicamba, fomésafène, glyphosate, glufosinate, MCPA, mésotrione, paraquat et sulcotrione.

15. Composition selon l'une quelconque des revendications 1 à 14, **caractérisée en ce que** la quantité totale des substances actives composant c) et/ou composant d) dans la composition est supérieure à 100 g/l, sur la base de leur équivalent d'acide.

16. Composition selon l'une quelconque des revendications 1 à 15, **caractérisée en ce qu'**elle se trouve sous forme de formulation de concentré, qui est diluée avant l'emploi et contient de 5 à 80 % en poids de ladite une ou desdites plusieurs substances actives du composant c) et/ou du composant d).

17. Composition selon l'une quelconque des revendications 1 à 15, **caractérisée en ce qu'**elle se trouve sous forme de bouillie de pulvérisation et qui contient 0,001 à 10 % en poids de ladite une ou desdites plusieurs substances actives du composant c) et/ou du composant d).

18. Composition selon l'une quelconque des revendications 1 à 17, **caractérisée en ce que** celle-ci contient un ou plusieurs adjuvants de formulation h) usuels, qui sont choisis dans le groupe constitué par les solvants non polaires, les substances inertes, en particulier les adhésifs, agents mouillants, dispersants, émulsifiants, agents de pénétration, conservateurs, charges, matières de support et colorants, et les agents influant sur le pH ou la viscosité, les polymères fonctionnels, d'autres adjuvants et/ou les antimousses.

19. Utilisation d'une composition d'adjuvant selon une ou plusieurs des revendications 1 à 8, pour l'amélioration de l'aptitude à mouiller les plantes par une réduction de la tension superficielle dynamique.

20. Utilisation d'une composition d'adjuvant selon une ou plusieurs des revendications 1 à 8, pour l'amélioration du pouvoir de mouillage de compositions de substances actives applicables localement.

21. Utilisation d'une composition d'adjuvant selon une ou plusieurs des revendications 1 à 8, pour la préparation de compositions aqueuses de substances actives.

22. Utilisation selon la revendication 21, **caractérisée en ce que** les substances actives sont des herbicides solubles dans l'eau.

23. Utilisation d'une composition selon l'une quelconque des revendications 1 à 18, pour la maîtrise de et/ou pour la lutte contre une végétation indésirable, des maladies fongiques ou l'attaque d'insectes chez des plantes.

24. Procédé pour la protection de plantes contre des organismes nuisibles, **caractérisé en ce qu'**on met les plantes, les organismes nuisibles ou leur habitat en contact avec une composition selon l'une quelconque des revendications 1 à 18.
